# EUROPEAN PATENT SPECIFICATION

(11) **EP 3 201 704 B1**
(45) Date of publication and mention of the grant of the patent: **22.03.2023**
(21) Application number: 15781255.3
(22) Date of filing: 30.09.2015
(51) Int. Cl.: G05B 19/05, F23N 5/24

(54) **SAFETY AND PROGRAMMABLE LOGIC INTEGRATION SYSTEM**
SYSTEM ZUR INTEGRATION VON SICHERHEIT UND PROGRAMMIERBARER LOGIK
SYSTÈME DE SÉCURITÉ ET D'INTÉGRATION DE LOGIQUE PROGRAMMABLE

(30) Priority: 30.09.2014 US 201462057668 P; 30.09.2014 US 201462057676 P
(43) Date of publication of application: 09.08.2017
(73) Proprietor: Honeywell International Inc., Morris Plains, NJ 07950 (US)
(72) Inventor: PATTON, Paul, Morris Plains, New Jersey 07950 (US); MCCARTHY, Timothy, Morris Plains, New Jersey 07950 (US); SORENSON, Ronald, Morris Plains, New Jersey 07962 (US); EVERS, John, Morris Plains, New Jersey 07950 (US)
(74) Representative: Houghton, Mark Phillip
(86) International application number: PCT/US2015/053335
(87) International publication number: WO 2016/054273

(56) References cited:
- EP-A1- 0 276 937
- US-A1- 2008 021 573
- US-A1- 2009 056 649
- Guillermo Pacanins: "System Integration: Using smart field devices to improve safety system performance - ISA", InTech Magazine, 28 February 2014 (2014-02-28), pages 1-3, XP055456518, Retrieved from the Internet: URL:https://www.isa.org/standards-publicat ions/isa-publications/intech-magazine/2014 /february/system-integration-using-smart-f ield-devices-improve-safety-system-perform ance/ [retrieved on 2018-03-05]

## Description

### Background

The present disclosure pertains to design, control, sensing and addressing relating to heating systems.

United States Patent Application Publication No. US 20090056649 describes protecting a boiler and heating system using a control board with inputs and outputs, an ambient temperature sensor and a boiler sensor, a power failure relay and an alarm relay. The sensors alert a system to a malfunction, and the system initiates an alarm pathway or a water circulation mode.

United States Patent Application Publication No. US2008/0021573 discloses a communication system for use in different application scenarios in automation technology and, more specifically, paragraph [0051] describes a rack/slot based addressing system.

### Summary

The present invention provides for a system for integration of safety and programmable logic and a corresponding method as claimed in the accompanying claims.

### Brief Description of the Drawing

Figure 1 is a diagram of the present system with example interconnected modules on a rail;
Figure 2 is a diagram of several arrangements of devices for the present system;
Figure 3 is a diagram representing equipment with terminals and lines of modules based on the types of electrical devices that need to be monitored or controlled in the equipment;
Figure 4 is a diagram of a wire sheet program editing environment that may be used to create a control program for the equipment;
Figure 5 is a diagram of activities that may be performed by a designer as part of developing an application for the present system;
Figure 6 is a diagram of a production line that may load one or more kits containing a design into an assembly of modules;
Figure 7 is a diagram of a platform bus with auto addressing using identification signal line;
Figure 8 is a diagram of addressing according to rail position;
Figure 9 is a diagram of a configuration layout of the various modules or devices and their components relating to the present system;
Figure 9a is a perspective diagram of a base module and slave modules; Figures 9b, 9c, 9d and 9e indicate connections among a base module, a limit control module, IO modules, a fuel air module, a burner control, and a flame amplifier;
Figures 10a, 10b and 10c constitute a diagram depicting an operation flow of auto addressing for the present system;
Figure 11 is a diagram showing a master state machine for the platform bus master;
Figure 12 is a diagram showing a state machine for slave modules on a platform bus; and
Figures 13-18 are diagrams of example message data structures used in auto addressing.

### Description

The present system and approach may incorporate one or more processors, computers, controllers, user interfaces, wireless and/or wire connections, and/or the like, in an implementation described and/or shown herein.

This description may provide one or more illustrative and specific examples or ways of implementing the present system and approach. There may be numerous other examples or ways of implementing the system and approach.

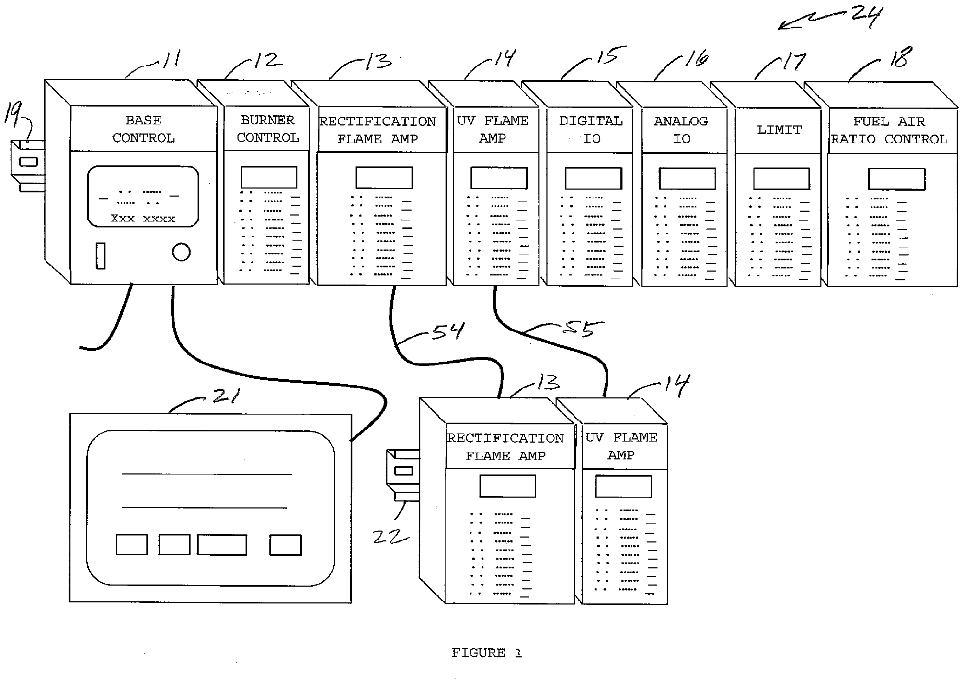

The present system may have a modular control that integrates configurable safety devices with user-programmable logic, inputs, and outputs. The system may allow an equipment manufacturer to create a customized controller by selecting modules and input/output (I/O) specifically for that equipment, and then designing a customized control program to make these items work together. The modules may be mounted on a DIN rail and each module may include side-by-side plugs and jacks to interconnect adjacent modules. Mounting the devices on a DIN rail may also interconnect them. Figure 1 is a diagram of the present system with example interconnected modules 11, 12, 13, 14, 15, 16, 17 and 18 on a DIN rail 19.

In control systems, a base or control panel module 11 may often contain a programmable logic controller (PLC) combined with separate safety devices such as burner controls 12. Safety devices may be separately responsible for the operation and the safety of critical equipment. Safety modules may operate as discrete and self-contained safety controls. In a system, the data produced by the safety modules may be connected to the non-safety programmable logic via wires and special logic may be used to infer what the control is doing. Or if the control includes communication, then the programmable logic may capture and interpret this using specialized custom software. In the present system, all safety module status data and all non-safety control of safety modules (such as a burner control call-for-heat signal) may be integrated with the programmable logic. There may be one system, even though the safety modules are independent.

The base module 11 may provide communication and user-programmable logic; and non-safety digital and analog I/O modules 15 and 16 may provide inputs and outputs for that logic. The programmable logic may be used to create any non-safety features needed by the equipment that the device is controlling. The programmable logic may allow an application designer to implement customized and differentiating features in a controller. To accompany this, present system may also include a completely configurable color touch screen display 21.

The system may be an array of modules 11-18 mounted together on one DIN rail 19 that work together to implement a control device for specific equipment. The minimum number of modules that may be used is two and the practical maximum number may be about twelve depending on the types of modules and the demand for power. The basic categories of modules may be a base module 11, I/O modules 15 and 16, and configurable safety modules. Base module 11 may be always the leftmost module on DIN rail 19. There may be just one module 11 on rail 19. All other module types may occur more than once. Base module 11 may provide power for the other modules, external communication (if any, it is not necessarily required) either via a 10BASE-T connector for ethernet-based protocols, and/or via a RS-485 3-wire connector for Modbus or BACnet/MSTP protocols), storage of data for device configuration and initialization, a real time clock and event logging, and a system control program.

Many of the modules may be passive. A primary active component in a system may be the control program in base module 11 which is typically responsible for making everything else "go". The modules may contain complex behaviors but they can wait for something outside of themselves to trigger the process of doing something useful.

An I/O module 15 or 16 may measure and condition its input signals, but it should to be told what to do and it does not necessary use the results. The module may provide them for some other module or external device to use. An I/O module may drive its outputs, but just if something else tells it what output signal to produce. A burner control 12 module may know how to start up and operate a burner, but just if something else requests this via a call-for-heat. A fuel-air control module 18 may modulate, but just if something else indicates a desired firing rate. A primary active component may be the control program which responds to stimuli and tells other modules what do by writing to the registers that control them.

I/O Modules 15 and 16 may provide inputs and outputs for use by the control program. Examples of I/O modules may include a 14-input digital I/O module 15 that also has 6 relay outputs, a 14-input digital annunciator I/O module that has 1 relay output, and an analog I/O module 16 that has up to 12 signal inputs and outputs.

The configurable safety modules in the present control system may incorporate a burner control 12, flame modules 13 and 14, fuel-air control 18 and actuators, and an analog limit control 17 (e.g., a temperature or pressure limit).

Safety modules cannot necessarily be programmed; just the base module 11 may provide this feature. The basic behavior of each safety module may be fixed but can be adapted to various purposes by changing configuration parameters. Burner control 12, for example, may have about 70 parameters to tune and select behaviors. Examples of the parameters may include timings such as prepurge, ignition, and postpurge times, a type of ignition such as pilot or direct, and the response to flame failure such as lockout, recycle, or recycle with a delay.

Inputs and outputs on a safety module may be available to the control program in base module 11 as readable items; however, these are not necessarily general purpose inputs and outputs like those on I/O modules 15 and 16. Instead, a safety module I/O may have a dedicated purpose. The inputs may be monitored and the outputs may be controlled only by the safety module itself, according to its rules for safe operation. A safety module may also have internal control parameters and status registers that are available to the control program. Each of these may also have a dedicated purpose. A few examples, for a burner control 12, may incorporate a parameter for a call for heat request (a non-safety signal which typically would come from the control program), status of the current burner state (e.g., standby, prepurge, ignition, firing and so forth), and a status: the elapsed time of the current state.

Flame modules 13 and 14, and fuel air actuators 18 may be noted. There may be a flame sensor module or modules for a burner control 12 and the actuators for a fuel-air control 18 belong to and may be operated by a "parent" safety module to implement some of its safety-related inputs and outputs. The flame modules 13 and 14 and actuators may be configured as part of the parent safety module's configuration. Flame modules may be mounted on a DIN rail 19 or can be mounted remotely on another DIN rail 22, such as to provide a flame amp module mounted close to its flame sensor.

Programmable logic control may be noted. A control program may reside and be executed within the base module 11. To create a control program, a designer may use a "wire sheet" editor within PC software called Niagara AX Workbench^{™}. The programming may be performed by drag-and-dropping function blocks onto an editing screen, dragging lines between the blocks to interconnect them, and opening a block's properties dialog box to set up its behavior.

When a wire sheet input block is used, the designer may attach it either to the data from an input terminal of any module, or to a source of data from internal logic such as burner status information provided by a burner control 12. When a wire sheet output block is used, the designer may attach the block either to control an output terminal of an I/O Module, or to send data to the internal logic of another module such as the call for heat request for a burner control. Base module 11 may provide communication with a display, some other device, or a building management or industrial control system, or all of these simultaneously.

Blocks placed on the wire sheet may provide "points" within the device that are accessible via a connected external communication protocol. Thus, the control program may operate according to inputs from the outside world or provide outputs to the outside world.

Although the present system may be assembled from modules, when finished and installed on a particular piece of equipment, the modules may appear to be a single device that operates a piece of equipment. From an external protocol's viewpoint, virtually all of the points in the device may reside at a single address.

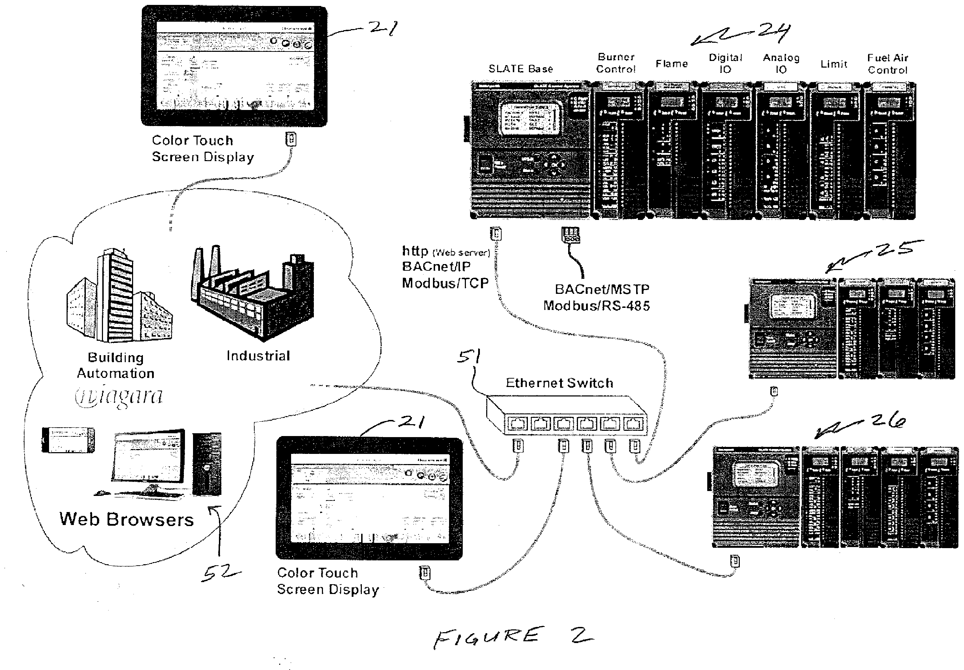

Support may be provided for protocols such as BACnet / IP (via 802.3i 10BASE-T), BACnet / MSTP (via RS-485), Modbus RTU / IP (via 802.3i 10BASE-T), Modbus RTU / 485 (via RS-485), and web browser access (httpd) (via 802.3i 10BASE-T). Figure 2 is a diagram of several arrangements 24, 25 and 26 of devices for the present system.

The following may provide a summary of how Niagara AX^{™} and other tools may be used in the process of creating a new device for the present system. The system may use the Niagara AX^{™} software as a primary PC-based programming tool for an application designer. An important goal of the present system design may be to minimize the complexity of Niagara AX for a user who simply wants to create a control. The environment seen by the user may include just those AX^{™} features that are relevant to an issue the user wants to solve, such as creating a control for some equipment. For the user, the wire sheet editor used to program a system base may be the primary and only component of AX^{™} that is relevant.

The Niagara^{™} framework may provide a powerful set of tools for the system itself and the framework also may allow the system to be viewed as one of the elements within a much broader scope. A primary purpose of the Niagara framework may be to provide software and hardware tools to manage a rich and complex environment such as a building or a campus, or an industrial site containing many devices that use various communication protocols.

In the descriptions herein, a user who is setting up a present system device for a particular purpose may be called an application designer or simply a designer. Typically, the designer may be an engineer who works for an OEM and is using the present system to create a control for some equipment manufactured by the OEM. The wire sheet program that the designer creates may be called a "control program" or sometimes just a "program".

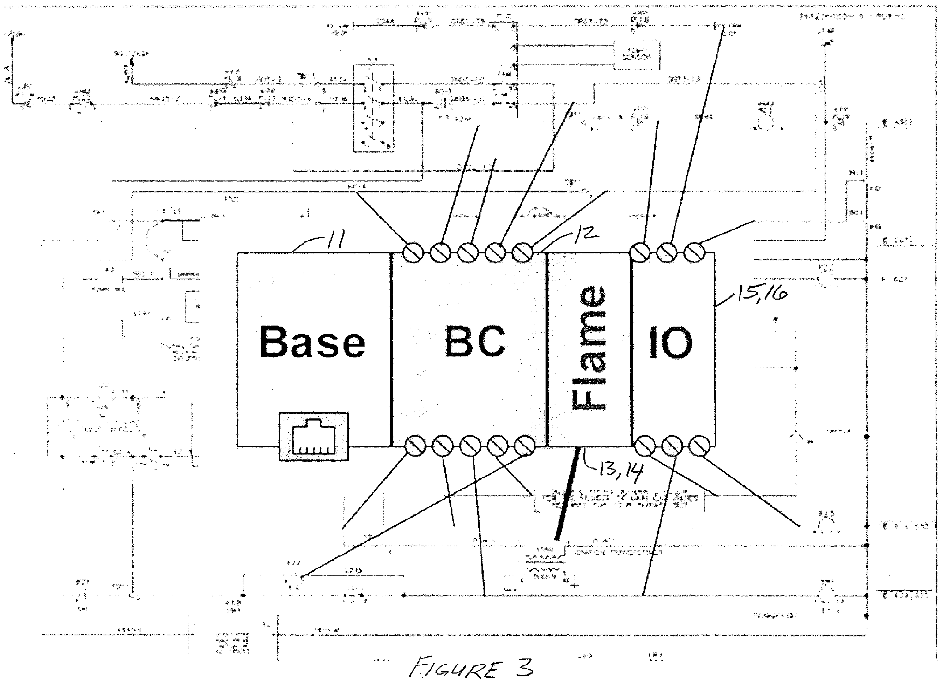

Figure 3 is a background schematic of equipment, screw terminals and lines indicating what a designer has chosen relative to modules 12-16 based on the types of electrical devices which need to be monitored or controlled in the equipment. For an actual design, the designer might use a schematic diagram, a list, or a form to record the choices.

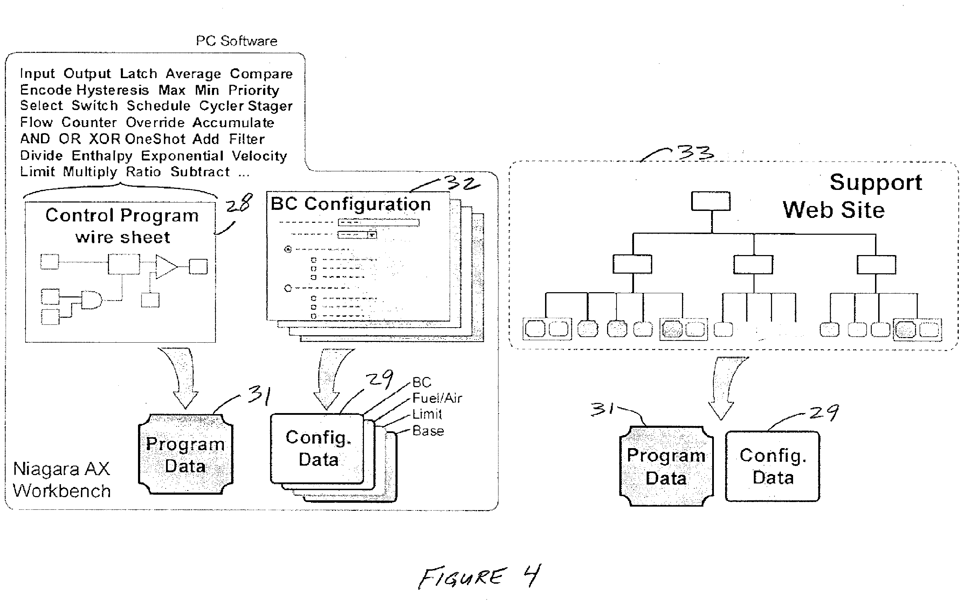

The Niagara AX^{™} wire sheet program editing environment may be used to create a control program for the equipment. Blocks representing inputs, outputs, and behavior, may be drag-and-dropped onto it and then interconnected by dragging "wires" (lines) between them. That step may be represented by control program wire sheet 28 on the left in Figure 4 along with a list of some of the types of blocks that are available. Some of the types of blocks may incorporate input, output, latch, average, compare, subtract, encode, hysteresis, max, min, priority, select, switch, schedule, cycler, stager, flow, counter, override, accumulate, AND, OR, XOR, one shot, add, filter, divide, enthalpy, exponential, velocity, limit, multiply, ratio, and so forth.

Another task performed within Niagara AX^{™} may incorporate setting up configuration data 29 for non-programmable devices, such as burner control 12. The task may consist of a set of dialog boxes that present choices via drop-down lists, fillin the blanks, checkboxes, and other techniques. The results may be one block of program data 31 that describe the control program and blocks of configuration data 29 for each of the safety modules, such as a burner control configuration 32 that contain the configuration settings. A support web site 33 may aid in obtaining the data.

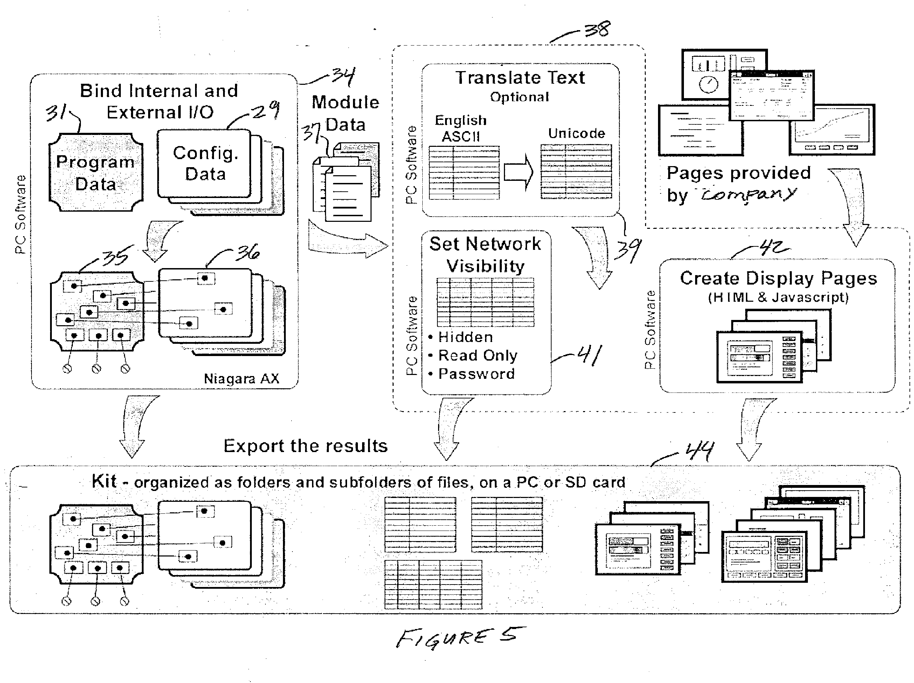

Other design-related actions may be noted. Figure 5 is a diagram of other activities that may be performed by an application designer as part of creating a device for the present application. Binding of block 34 may be the process of defining the actual screw terminals 35 or registers in the modules that are used by the program logic. Binding may be done within the wire sheet programming environment and may be done as-you-go, or as a separate step. Binding of terminals 35 may be to an I/O 36. An example of the binding may be a generic program downloaded from a web site, which is then modified for the present system, if needed, and then bound to the actual I/O needed by the equipment.

Module data may go from block 34 to a block 38 where text may be translated at symbol 39, network visibility is set at symbol 41 and display pages may be created at symbol 42. Pages may be provided by a company to symbol 42. Results from symbols 34 and 38 may go to symbol 44 where they can be organized as folders and subfolders of files on a PC or SD card.

The text used by modules to label and describe parameters and their values may be translated into some other language at symbol 38. When this is done, the standard English language text may still be preserved and available as an option, for use by personnel that prefer English.

Simply using any module may create many network-visible inputs and outputs in a device. An application designer may create others via wire sheet programming. The network inputs and outputs (or "points") may be filtered to make them hidden and remove them from visibility to the communication protocols. For example, of the hundreds of points that are available, a particular application designer may prefer to reveal only a dozen or so as items that represent the equipment and that are useful to the site where the equipment is installed. Also each point that is potentially writable may be set to a read-only condition, or a password to be applied, and/or range limits to be set. These choices may be made via a form that is available within Niagara AX, as part of creating a control program.

The display screens installed in a present system device may be web pages and the base may implement a web server to provide these pages to the display or any web browser, such as a browser in a PC or smart device. There may be a set of display screens for each of the modules that an application designer can use as-is, or adapt, or replace with a different design. The application designer may also create screens for the wire sheet programmable logic to represent the status of the controlled equipment.

All of the data created by the application designer may be exported along with mandatory data provided by a company, to create a present system "kit". The kit may be a single file, implemented as a .zip file, containing a folder structure with files in a specific form that is compatible with the present device. The name of a kit may be chosen to reflect a purpose of the design; for example, it might be named for a particular model of boiler, furnace, air handler, or whatever the design is intended to control.

A significant part of the present system may be the verification process for safety configuration data. Whenever safety data is changed for any reason, a safety device may enter a risks addressed (i.e., a shutdown) state until that change has been verified. Verification may consist of reviewing each data item without changing it and then, instead of sending a "read" or a "write" command to the module, a "verify" message may be sent.

A process of verification may incorporate pressing the "Select" button on the module, to confirm that the one being verified is the intended module within the intended device, because a display may be connected to different devices and a device may contain multiple safety modules. Verification may also need a password.

After an entire design is verified (all modules), it may be possible to save the verification status and load it with a kit so that an OEM does not have to re-verify the same design over again each time the design is replicated.

Typically, an operator in an OEM factory may load the kit into a device by assembling all of the required modules on the DIN rail, applying power to the system control; connecting a PC that is running a loader program to the base module's using a standard internet cable; selecting the desired kit from a drop-down menu (after the first time it will remain selected and this must be done only if the operator needs to change it), and clicking a button to send the kit to the system control.

The kit may be then loaded into the modules and when this succeeds, a "Pass" indication may be provided; or if it fails then the reason may be logged.

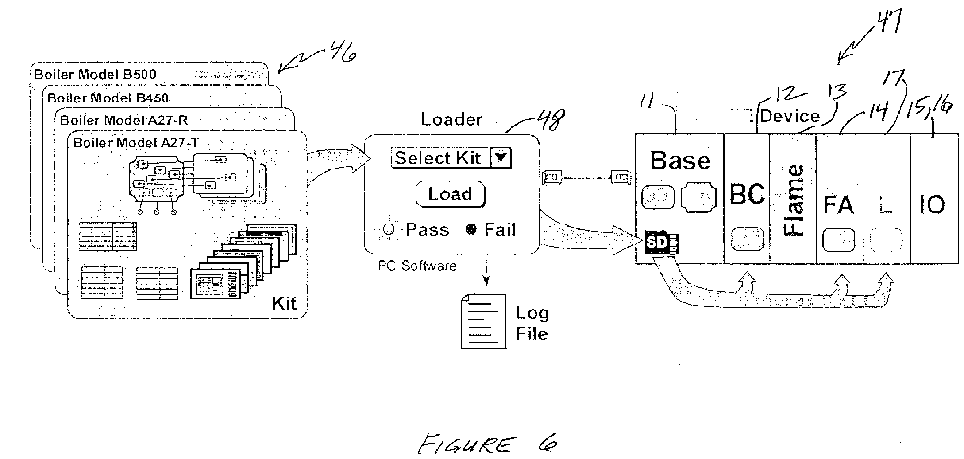

Figure 6 is a diagram that illustrates a production line that may load one or more of several kits 46 of, for example, boiler models, containing a design into a match assembly of modules of a device 47. A kit 46 of a design may be provided by a loader 48 to device 47.

Another way to load a kit may be to install an SD card that already contains a kit, and copy the information into the modules from there. The step may also occur as part of loading via a Loader program. A primary activity performed by the Loader may be to copy the kit onto the SD card. The SD card may provide a backup of module configuration data, storage for trend logs, and the device's display pages that are shown by the web server.

A display 21 and device 24 may have a single RJ-45 jack for ethernet communication. They may be connected to each other via standard ethernet cables such as Cat-5e with RJ-45 connectors on both ends. (Figure 1.)

A crossover cable is not necessarily needed because the display adapts automatically, thus an inexpensive standard cable may be used. For cables with RJ-45 ends already attached, a 3 foot cable suitable for connecting a device to a panelmounted display on the panel door may be used. Longer cables up to 100 feet with RJ-45 ends already attached may be used.

Figure 2 is a diagram that shows how multiple devices and/or displays may be interconnected in any combination using a router or a standard ethernet switch 51. Various connections of devices may be effected via a router. The core of a display 21 may be a standard web browser and a device may be a standard web server. Thus, a display may also be connected to a device from any point in the cloud that has visibility to the device. Rules that apply to servers and browsers 52 connected via the Internet may also apply to devices with an exception. Neither display 21 nor device 24 may run a virtual private network (VPN) protocol. Thus, display 21 may be used just within the same private LAN that contains the device. A private LAN may be assumed, in that placing a device directly on the public internet is not necessarily recommended; although the device may have network security features. The device should be within the security boundary of a private network.

A PC, a smart phone, or pad may also access a device via a web browser. The device may serve its display web pages to those items just as easily as it does to the display itself. The present system's web server may be designed to support, for example, a Chrome^{™} browser.

Although the display and devices do not necessarily implement VPN, a virtual private network that is implemented by routers at both ends which "tunnel" through the public internet may allow a remote system display to connect. Otherwise, a PC may be used as a display and it can run VPN protocols to access a private LAN from virtually anywhere on the Internet. Some smart devices may also support VPN.

Like a web browser, the display may be set up to have a "home page" on a particular device or any other network location that is visible to it. The display may also support bookmarks (favorites) for quick access to previously saved locations, such as a set of different devices.

A display may incorporate one capability not necessarily present in a PC or smart device. The display may poll for local devices. When invoked (this approach may be its start-up default), the display may poll the local subnet and list any devices that it finds, showing them as a list of names with IP addresses. Each item in the list may be a link, and touching one of those may open that device's top level web page.

The display screens provided by the present device may be implemented as a web site, that is, as a set of web pages, can be stored within the device. There may be a set of standard pages that an application designer can modify as desired or use as a starting point for new pages. Also new pages may be created from scratch.

Since the display may be a standard web browser and the device may be standard web server; many appearances, features, and behaviors that one sees when visiting Internet web sites may be available for displays of the present system.

Any web site design tool may be used to create web pages; however, for the present system to make the task easier, the development environment may provide a web page editor that has special features specifically for the present system. The editor may know how to load in the design information for a device that allows it to offer pop-up lists that let a page designer easily connect web page components (widgets) to data of the present system.

The device web page editor may provide palettes of icons called "widgets" that are drag-and-dropped into a design rectangle that represents a display area. Each type of widget may have a particular way of displaying itself. Text widgets may allow text to be displayed or entered. Button widgets may be clicked or touched to activate them. Graphical widgets may animate a spinning fan or a flickering fire or water flowing. The editor may be used to create pages for the display. However, the editor also may be used for various screen sizes such as to create display pages for a PC-sized screen.

The web page editor may support several kinds of "containers", pages, panes, and tabs. Each of these containers may be set up with different backgrounds and can contain widgets. One may be the web page itself, but within that page there also may be one or more panes and one or more tabs. Panes may be rectangular areas that surround other widgets to make it easy to move them as a group, or copy an entire group. Tabs may be like panes, except that there are many areas in the same place, and a tab can be clicked/touched to show that tab's contents and hide the contents of other tabs. A widget within a container may have its own connection to a particular data item within a device, or it may "inherit" part of its connection from its container.

A primary present system distinctive feature of the editor may be that it can read the output files produced for a particular application design and then use this information to make it easy to connect display widgets to present system data for display screens of the application.

For example, a numerical read-out widget (a text box) and a graphical widget (e.g., a variable sized flame or a growing/shrinking bar) may be desired to show the flame strength in the burner control. Providing the widget via the design tool may consist of dragging the widget's icons from the palette into a desired location in the design area (or clicking the widget to select it if it is already there), and then for each of them, selecting "Burner Control" via a modules pop-up list, and then selecting "Flame strength" via a registers pop-up list that shows the registers in the selected module.

For another example, a touch-screen button may be desired to show the on/off status of some application-designed logic and to toggle that state when it is clicked/touched. An application designer may have created a wire sheet input named "App Enable". Providing status and control for this via the display editor may consist of dragging a button widget from the palette into the design area (or clicking the widget to select it if it is already there), then selecting "Wire Sheet" via the modules pop-up list, and then selecting "App Enable", a name that the designer provided via the registers' pop-up list that shows the registers defined by the wire sheet.

The editor may be able to automatically generate an appropriate JavaScript^{™} that is "behind" a widget to cause it to fetch/send/use system or device data when that widget is displayed. The data linkage between the JavaScript running in the browser (e.g., the present system or device display) and the system web server running in the system base may be via standard http protocol URLs. When the page is saved as an .htm file, the JavaScript and the URLs used for data input/output may be within the saved page as text. Thus, in addition to documentation, one may create examples that show what the editor is generating to interact with the server in the system base module.

A display may be a standard web browser. The display may display device pages or any pages provided by a web server to which it can connect in its network. Display behavior may be any behavior that can be expressed in the JavaScript programming language. Display appearance may be any representation supported by HTML5 and HTML5 Canvas (e.g., a Chrome browser). The data available to the display may be virtually all of the configuration, control and status data built into modules as well as data inputs and outputs created by an application designer via the wire sheet program. Any of the various free or professional web page design tools may be used to create displays, but the present system display design tool may have some added convenience. Amateur or professional web site designers may create displays for the present system. Amateur or professional graphics designers may create backgrounds, buttons, icons, logos, animated graphics, and so forth, for the display of the present system.

Modular flame amplifier system with remote sensing may be noted. A flame amplifier or flame amp may be a name for a circuit used in combustion flame sensing, that operates the electronics of a flame sensor and converts a signal provided by the flame sensor into a proportional flame strength signal that is sent to a combustion controller.

In some controls, the flame amp may be integrated into the same enclosure and circuit board as the combustion control, or it may be a plug-in module that attaches to the combustion control. The plug-in module may provide flexibility in that an appropriate flame amplifier may be used to match virtually any sensor type, without requiring the controller to change. Flame sensing technologies that use different flame amps may incorporate a rectification in which a flame signal is indicated by a tiny difference in the positive versus a negative conduction of an AC signal, ultraviolet light in which the pulse rate of a vacuum tube changes if the light of a flame impinges upon it, and optical sensors which measure the visible or infrared light and sometimes detect a flickering as an indication of flame.

Several issues may arise with flame amps. One issue may be noise. Flame amps may require that the flame sensor wiring be long to bring a signal from the sensor which is near the burner, to the flame amp which is in or on the combustion control that is mounted in a panel, at some distance away from the burner. The arrangement of long distance may make the signal susceptible to noise and degradation.

Another issue may be a limited configuration. Flame amps may be mated to or integrated into a control. Some controls may provide for two flame amplifiers and two flame sensing technologies, either by integrating these items into the control or providing two plug-in devices; but this approach may be rare and, in any case, the possible flame amp configurations may be limited by the design of the control.

An issue may occur with relay switching. For combustion systems such as "bed" burners, where the gas burner is large and spread over an area, it may be necessary to use multiple flame detectors. At start-up, one detector (and a flame amp) may be used to detect that the flame has initially been established at one end of the bed, and other detectors and flame amps may need to later prove that the flame has reached the far end of the bed. In some systems, external relay switching may be used to swap different flame detectors into the control's single flame signal input and this external relay may add to cost, increase the chance of component failure (more components and moving parts) and it should be evaluated for safety impact if the relay fails.

Another issue may be power and component cost. For flame sensing via an ultraviolet vacuum tube, a shutter solenoid device may be used to interrupt the light to the sensor, for sensor testing. The shutter may add to the cost and require extra power.

The present system and approach may allow multiple flame amplifiers to be connected to a combustion control via a multi-drop communication bus that is designed to be noise tolerant and use a safe and secure communication protocol.

Noise tolerance improvement may be attained. If convenient, a flame amplifier 13, 14 may be mounted in a normal location, adjacent to combustion control 12 in the control panel (Figure 1) and in this case it may support ordinary wiring that brings the sensor signal all the way to the control panel. However, as an alternative, an installer may choose to mount a flame amplifier 13, 14, remotely near the flame sensor, so that a noise-susceptible sensor signal that uses wiring which is short and direct and more noise-immune wiring between the flame amp and the control may carry the signal over the greater distance.

Multiple flame amps may be supported. Because a multi-drop bus is used, multiple flame amps may be connected as easily as one flame amp, using just one set of connectors on the control. This approach may allow virtually any number of flame sensors to be used for both redundancy and flexibility. For a bed burner, the present system may easily accommodate a detector at each end or at several locations across the bed, and for reliability and/or increased safety, multiple sensors can be used at each location.

Installation flexibility may be noted. The design of the connectors and a physical form of controller module 11 for the present control and flame amps may allow an installer to choose either an adjacent or remote location of flame amps 13, 14, with no changes to the design or setup of the control. The choice may be "invisible" to the control and thus the installer can be free to choose whatever is best. Additionally, if the flame amp is adjacent to the control, a cable to connect the flame amp to the control is not necessarily required.

Ease of installation may be noted. The present design may also allow multiple controls and flame amps to co-exist on the same DIN (Deutsches Institut für Normung) rail 19 mounting without confusion about which flame amp belongs to which control, and with automatic correct wiring. This may be implemented by a connector design and a rule that all flame amps belonging to a control need to be immediately to control's right on DIN rail 19.

Reduced cost/power may be achieved. A shutter system for a UV tube detector may be potentially more expensive and require more power than a dual UV flame detector with no shutter. Because multiple flame amps and sensors may be easily supported, the cost and power demands of a shutter can be eliminated.

Configuration flexibility may be noted. The present burner control may provide multiple "recipes" for flame amp configurations. This may allow an application designer to easily choose an appropriate application. Examples may incorporate a single sensor for detection of a flame, a dual sensor with an OR configuration (redundant in that if either is on then there is flame), dual sensor with an AND configuration (better safety in that both must be on to prove a flame), a single sensor plus delayed sensor (a bed burner in that a first sensor must be on immediately, second sensor is in after a delay), a dual sensor plus a delayed OR configuration (a dual OR sensor but with each sensor having a backup for redundancy), and a dual sensor plus a delayed AND configuration (a dual AND sensor but with but each sensor being duplicated for better safety).

The configurations may be independent from the actual sensor type, which is virtually any recipe that can be used with the same types of sensors and amps, or with any mixture of sensor types. Multi-burner systems may often use a (fixed) design in which each burner is monitored by both a rectification and a UV sensor.

The present flame amps may provide electronics and connections for multiple flame sensors within a single flame amp module. The flexibility may be softwareconfigured using safety-rated software techniques and communication protocols.

The present system 24 may provide flexible and configurable recipes for flame sensors. Support for more than two sensors per control may be good for the present system. System 24 may have flame amps 13, 14 mounted remotely from the control via cables 54 and 55, respectively. (Figure 1.)

An equipment designer using the present system may choose the positions where flame sensors will be used and determine how many different sensors to use. The equipment designer or installer may select flame amplifiers that are compatible with the chosen flame sensors, and use safety-rated software to configure the control system.

Module auto addressing in a platform bus may be noted. Modules in the system may be interconnected together with a common platform communication bus to interact with one another. Unique module addresses may be necessary to ensure that modules communicate correctly. Modules may be physically connected in any order on the platform bus and the number and types of modules can vary by installation. Fixed addressing for each module is not necessarily possible for a plug-and-play installation. Module address assignment may be performed dynamically at run-time to ensure unique addressing for all modules. Modules may be physically located in any order and be functionally able to communicate on the platform bus.

Auto addressing may be automatically invoked when system is powered up and can be manually invoked anytime thereafter. Results of auto addressing may be evident at the master module.

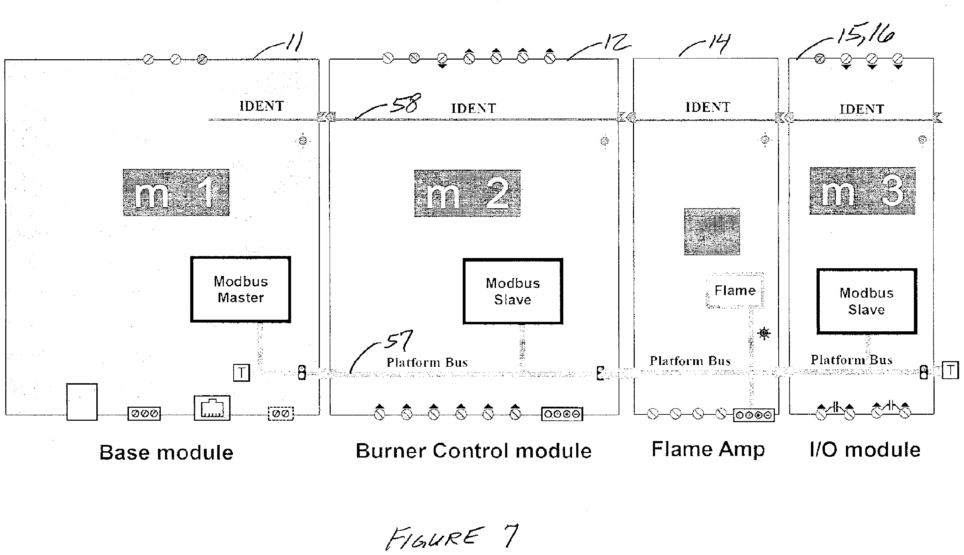

Platform bus MS/TP auto addressing using IDENT signal line may be noted in Figure 7. The present algorithm may dynamically assign device MAC addresses to modules on a platform bus 57 at run-time. Platform bus 57 may use a BACnet MS/TP LAN data link protocol for inter-module communication. The algorithm may be automatically performed at a base module boot-time and upon a command later on when directed to do so. Until the algorithm is executed, the modules designated as slaves on the platform bus (all modules other than the base module) do not necessarily assume any device address (i.e., an address initialized to broadcast address), and therefore, do not necessarily respond to any MS/TP messages directed to a specific address.

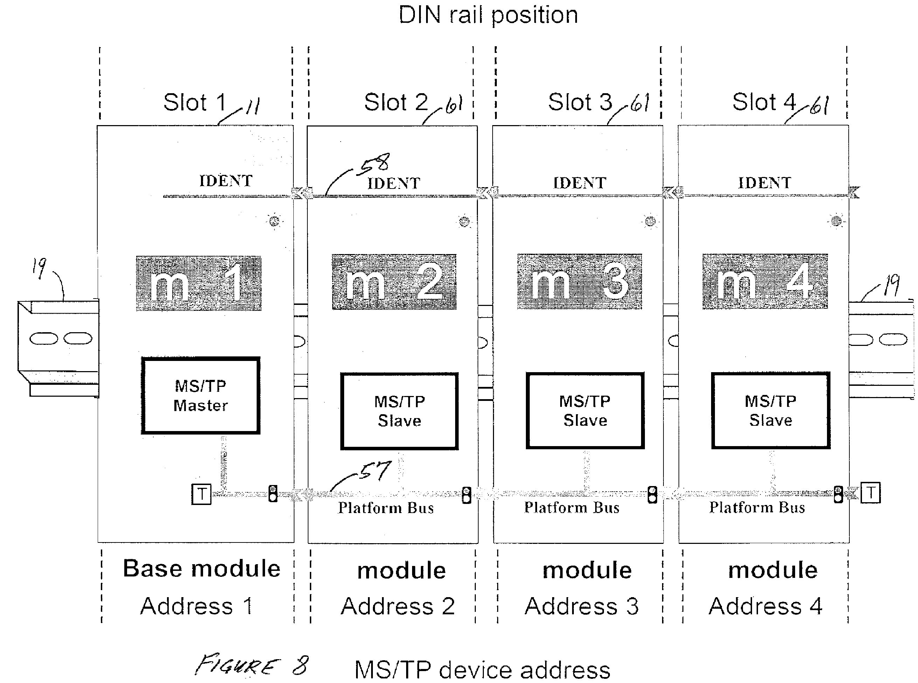

Modules on platform bus 57 may be connected in a manner as Figure 7 depicts. Base module 11 may be the only MS/TP master on the bus, and the other modules 61 may be MS/TP slaves. Platform bus 57 may be an RS-485 two-wire network with voltage differential signal lines, data+ and data-. The bus may be terminated at both ends with 120Ω resistors (one in the base module and one in the last module on the bus). Terminating resistors are not necessary for a bus with a short length. The resistors are mentioned in case they may be needed. Platform bus 57 may run through sub-base connectors interlocking modules 61 together on a DIN rail 19. Figure 8 is a diagram of MS/TP addressing by DIN rail 19 position.

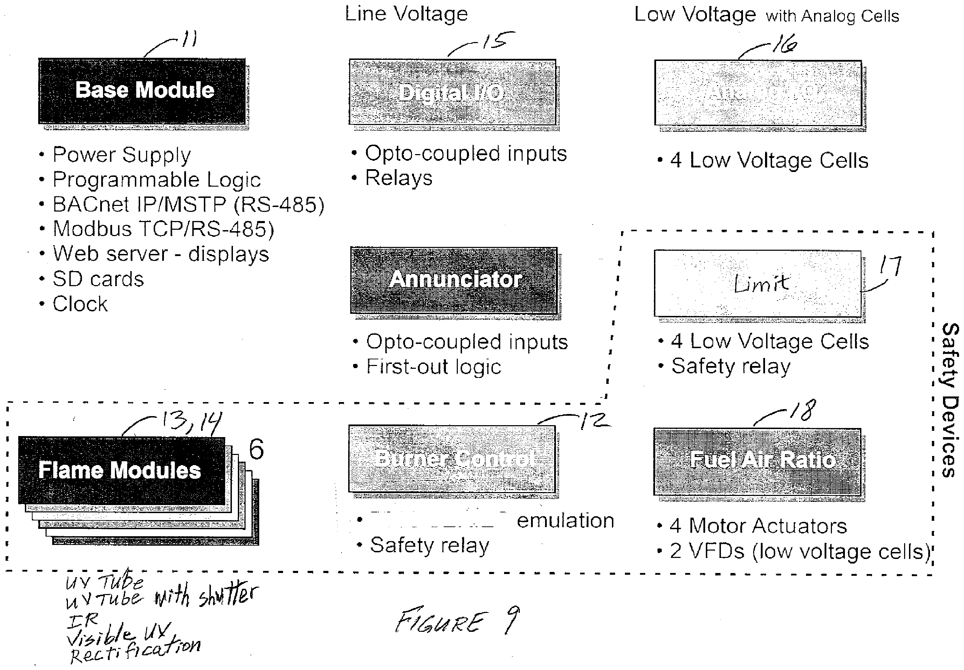

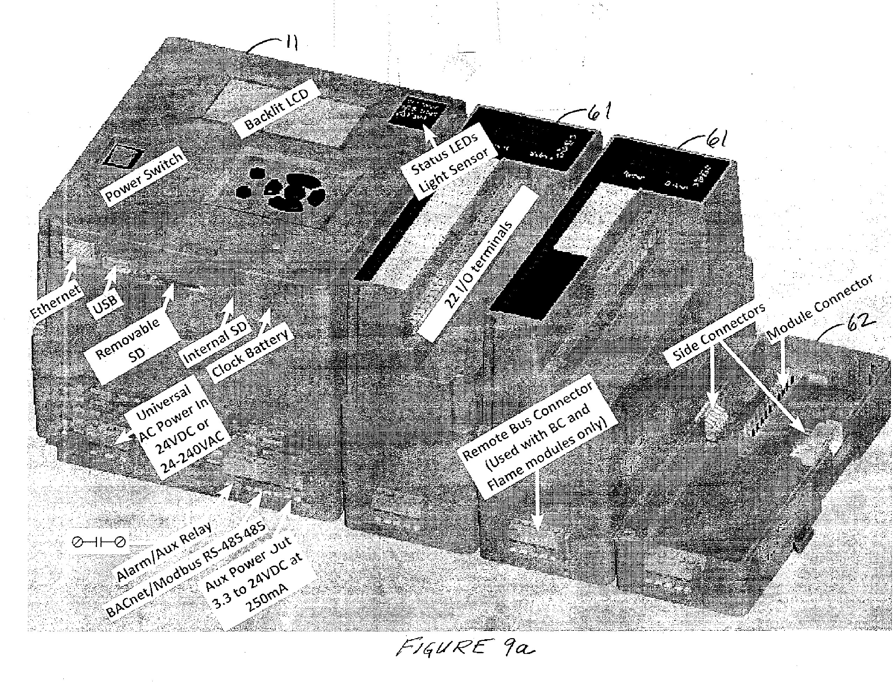

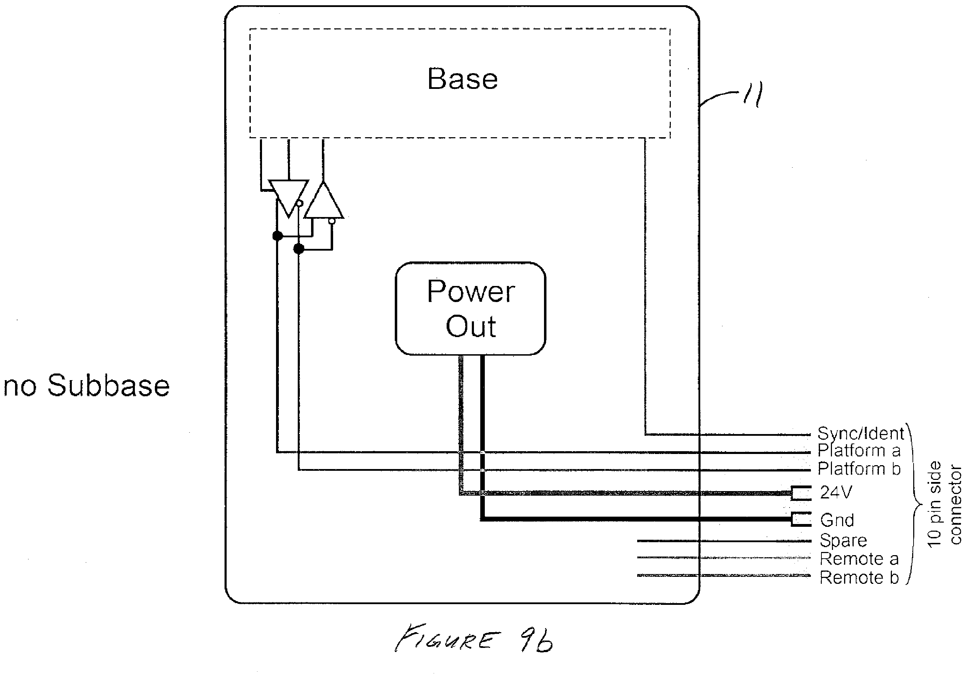

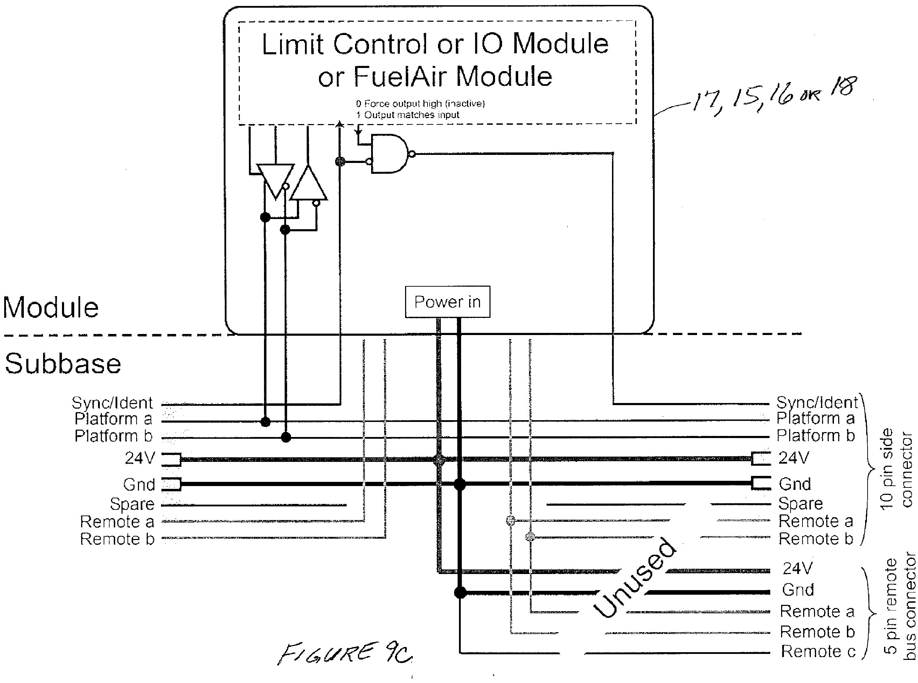

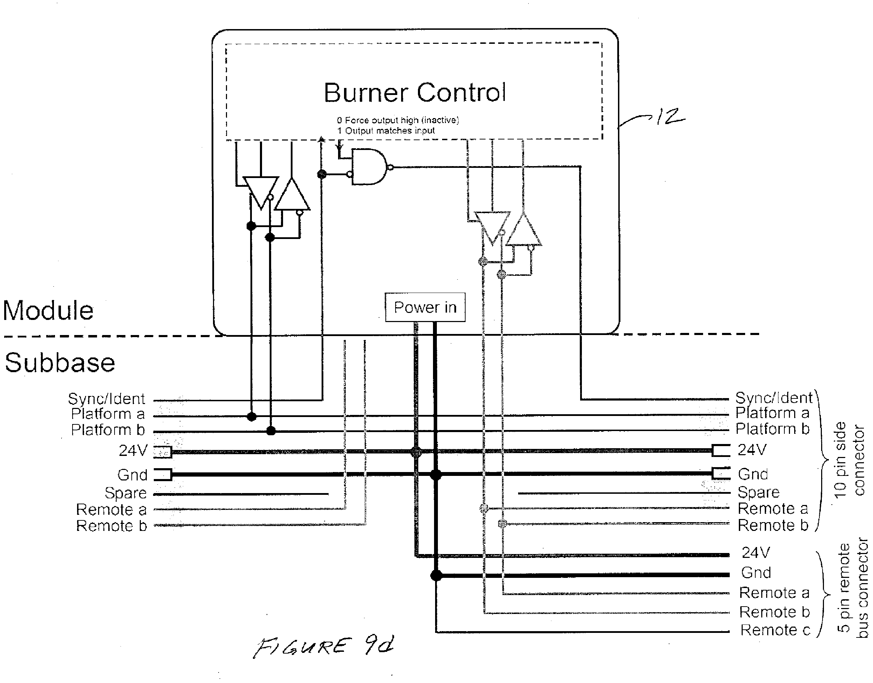

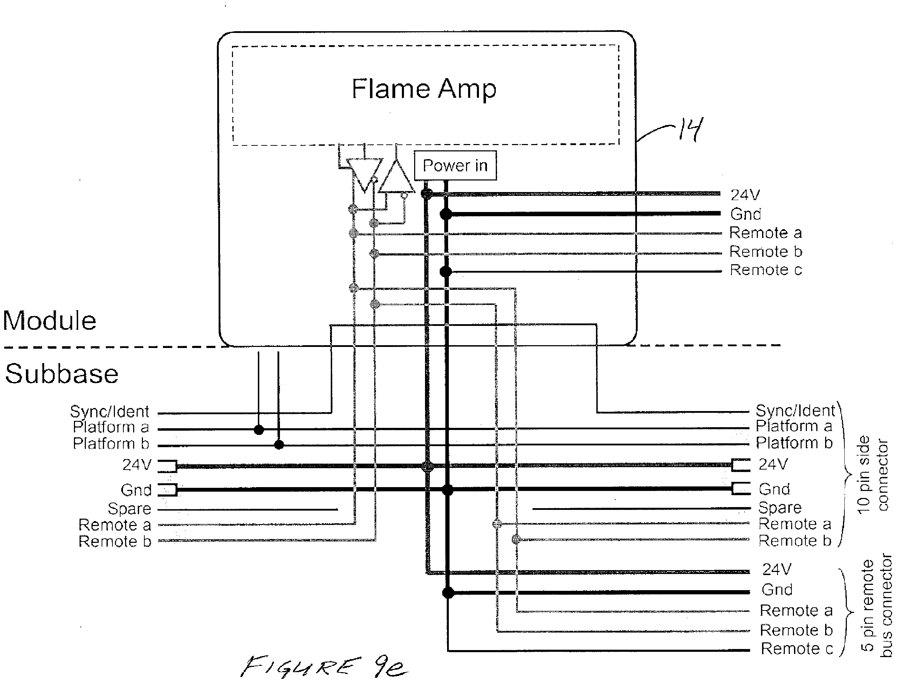

Figure 9 is a diagram of a configuration layout of the various modules or devices and their components relating to the present system.

A component used in the algorithm may be an IDENT signal line 58 that can also run through each module via sub-base connectors. The IDENT signal may normally be run directly through each module 61 via hardware so that the input side of the module is automatically routed through the module to the output side. The output IDENT signal may be overridden, however, by software inside the module to control the signal presented to the adjoining module. Figure 9a is a perspective diagram of base module 11 and slave modules 61. Item 62 may be an example of a sub-base for modules 61. Figures 9b, 9c, 9d and 9e indicate connections among base module 11, limit control module 17, IO modules 15 and 16, fuel air module 18, burner control 12 and flame amp 14. These connections are representative of an example hook-up.

Auto addressing may be noted. In the algorithm, base module 11 assumes device address 1 even though it is not technically a slave device 61 on bus 57. The assumption may be more for user interface purposes to give a user a perception that addresses are assigned to virtually all modules starting with the address of one. Also, the device address is used when the module 11 provides its own data onto platform bus 57. The addresses is allocated and assigned to each module based on their physical position on DIN rail 19. Addresses are assigned in numerical order from left to right by their DIN rail position.

Base module 11 has an address 1 by default. A module 61 adjoining the base module 11 on its right side is the first module to get an address assigned (i.e., address 2). A module to the right of the second module is next to get its address assigned (address 3), and an assignment proceeds to the right until all modules 61 have an assigned address.

In accordance with the claimed invention, modules that do not participate on platform bus 57, but occupy space on DIN rail 19, e.g., flame amplifier module 14, are not assigned an MS/TP address for platform bus 57. Platform bus 57 simply pass through these modules onto the next adjoining module 61 eligible for an address.

Auto addressing may begin by base module 11 putting all modules 61 into an auto addressing mode. Base module 11 may cause an entry of this mode by broadcasting a proprietary frame message on the platform bus with an "AUTO Address" frame type code. After all modules 61 have been allocated an MS/TP device address, base module 11 may direct virtually all modules 61 to leave this mode by broadcasting a proprietary frame message with an "AUTO Address End" frame type code.

Virtually all platform bus communication in this algorithm may use proprietary frame messages to ensure that the special messages are not necessarily confused with normal traffic data and also since no specific frame types exist that match the intentions of them. The proprietary frame types that may be used in the algorithm can incorporate 128 (0x80) - AUTO address start, 129 (0x81) - AUTO address end, 130 (0x82) - OFFER address, 131 (0x83) - ASSIGN address request, 132 (0x84) - CONFIRM address assignment, and 133 (0x85) - ACKnowledge address confirmation.

Since these messages are not necessarily standard MS/TP frames, they may have an assigned a vendor identification code (e.g., value 17) as the first octet in the data portion of the frame. The format of these proprietary frames may be given in an MS/TP message format.

IDENT signal line 58 may be used in the algorithm to signal when a module has its address assigned and may be permissible for the next adjoining module to have an address assigned to it. Once a module has an address assigned, the module may drive the IDENT output high continuously until auto addressing is complete for all modules. When Auto addressing mode is finished, the IDENT output may be returned back to the low state.

Each module on the platform bus may employ an idle timer to look for an idle bus. The idle timer may be a count-down timer (i.e., it starts at a specific value and counts down to zero to denote timer expiry) and may be used for several purposes by each module during the algorithm:
A line timeout may detect when an end of a transmitted packet on the bus has finished (normal purpose for all of MS/TP communication). A sequence delay may be a delay between sequences in the algorithm where a minimum of 1 ms of no bus activity exists between each packet transmitted on the bus for this algorithm. Response timeout may occur when the base module waits up to 40 ms for an expected response from a slave module. Auto address timeout of 100 ms may occur when no MS/TP activity occurs on the bus that denotes the end of auto addressing mode, and therefore, the modules may exit this mode and resume normal activity on the bus.

By default, after a MS/TP packet is received by a module (whether it is directed to the module or not), the idle timer may be reset to the auto address timeout value unless the module is directly involved in the next sequence of the algorithm.

Auto addressing may proceed according to the following approach. First, a base module drive IDENT output may be low. Second, a base module may broadcast an AUTO address message and wait for 30 ms following transmission. In an AUTO address message, a list of all known addresses from a previous auto addressing procedure may be included. Base module 11 may set the next available address to 2 since the address of 1 is taken by the base module. Third, virtually all modules 61 may see the AUTO Address broadcast and enter an Auto addressing mode (Address pending state). Each module 61 may drive its IDENT output low and scan the known address list in the broadcast to see if its current address is in the list. If the address is in the list, then the module may set an ADR to this address, otherwise the ADR may be initialized to 255. An ADR may be a variable that each module uses to store its assigned address. Modules 61 may wait up to an auto address timeout for the next command.

Fourth, when the base module's idle timer expires (e.g., 30 ms), the module may broadcast another AUTO address message again and drive its IDENT output high. The module may wait about 20 ms following the transmission. Fifth, any module that missed the first auto address broadcast may enter an auto addressing mode (address unassigned state) and drive the IDENT output low. The modules may reset their idle timer to the auto address timeout value.

Sixth, the module 61 immediately to the right of base module 11 may see that the IDENT input is high now (transition from low to high) and know that it is the selected module to get an assigned address. The module may enter the address selected state and wait up to an auto address timeout for base module 11 to offer it an address.

Seventh, when the base module's idle timer expires (e.g., 20 ms), the module may broadcast an OFFER address message with the next available device address in it. Also included in the message may be a current list of addresses that have been assigned so far. A first OFFER address message may just include the base module address, but the list can grow as each module 61 is assigned an address. After the broadcast is sent, base module 11 may enter the waiting slave address state to wait for a slave response.

Eighth, when the selected module on DIN rail 19 sees the OFFER address broadcast and the IDENT input is still high, it may know that the offer is directed to it. Module 61 may compare the address list and see if its current address is contained in it. If the slave module's current address is not in the list, the current address may be reused or the next available address from the OFFER message may be used. The selected address may be placed into the ADR and an ASSIGN address request containing this address may be broadcast. Also included in the ASSIGN request may be the module type and serial number of the module. The module may enter the address assignment state and wait up to an auto address timeout for an address confirmation. Values for the module types are not necessarily given. The module type may be irrelevant, but is included since base module 11 may need to know this information for other purposes.

Ninth, virtually all other assigned slave modules 61 may ignore the messaging going on between base module 11 and targeted slave module 61. They may reset their idle timers to the auto address timeout value after each complete message is received and wait for the process to complete.

Tenth, when base module 11 sees the module's ASSIGN address request, it may add module 61 to its module list and enter the address confirmation state. Base module 11 may send a CONFIRM address message back to the module 61. The new message may contain the device address, module type, and serial number sent in the broadcast and serve to confirm the address assignment in the module. Base module 11 may wait for a response from the selected module 61. Eleventh, if the base module does not see any response to its OFFER address broadcast (response timeout), it may assume that the addressing is complete. Base module 11 may enter the Address assigned state and go to a fifteenth step of the present approach.

Twelfth, slave module 61 in the Address assignment state may see the CONFIRM address message and send an ACK response message back to base module 11 with its module type, serial number, and OS number in it. After the response has been completely sent, the module may let the IDENT input signal pass through it onto the next module on DIN rail 19. The confirmed module may enter the address assigned state, set its idle timer to the auto address timeout value, and wait with the rest of the assigned modules. All further MS/TP communication by module 61 may use the assigned device address.

Thirteenth, when a next module 61 on DIN rail 19 sees the IDENT input signal transition from low to high, the next module may know that it is now the selected module for the next new address. The module may enter the address selected state and wait up to auto address timeout for base module 11 to offer the module 61 an address.

When base module 11 sees an ACK response, it may reset its idle timer and go to the seventh step of the present approach to find the next slave module 61 located on DIN rail 19.

Fifteenth, when there are no more slave modules waiting for an address assignment, base module 11 may broadcast an AUTO Address End message onto platform bus 57 to notify all slave modules 61 to exit Auto addressing mode. Included in this broadcast message may be the total number of address assignments that occurred. Base module 11 may enter the addresses assigned state and exit auto addressing mode.

Sixteenth, when virtually all of the slave modules 61 see the AUTO Address End broadcast, they may discontinue driving the IDENT output signal (i.e., they let the hardware automatically handle it), and exit the auto addressing mode.

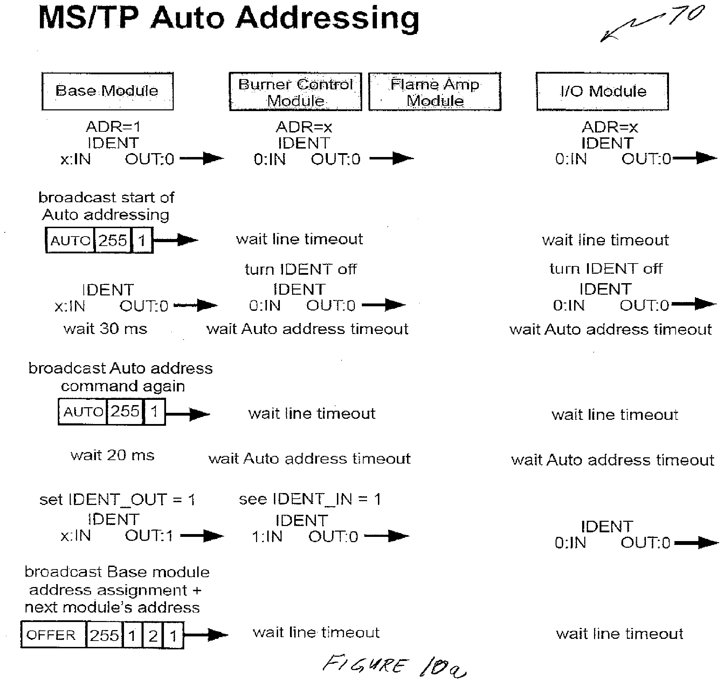

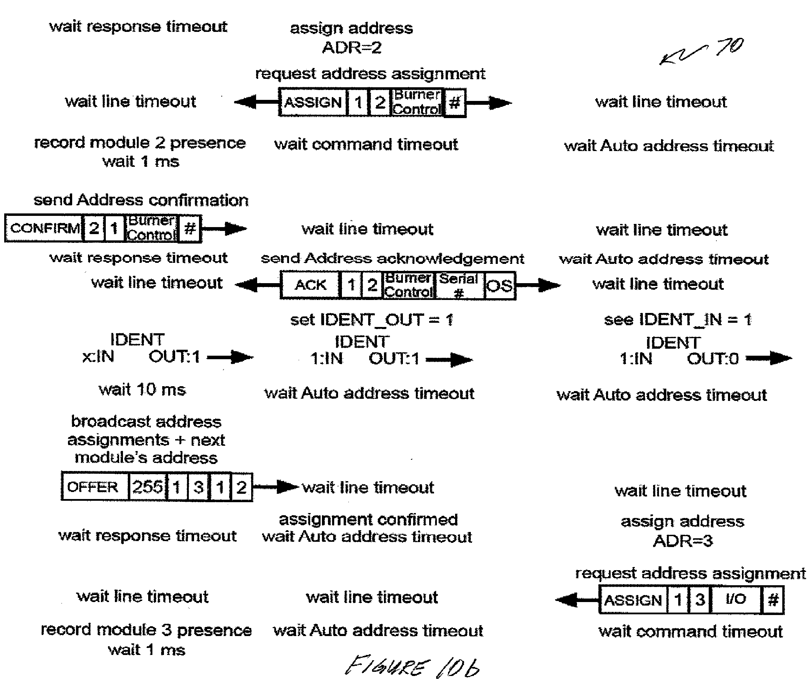

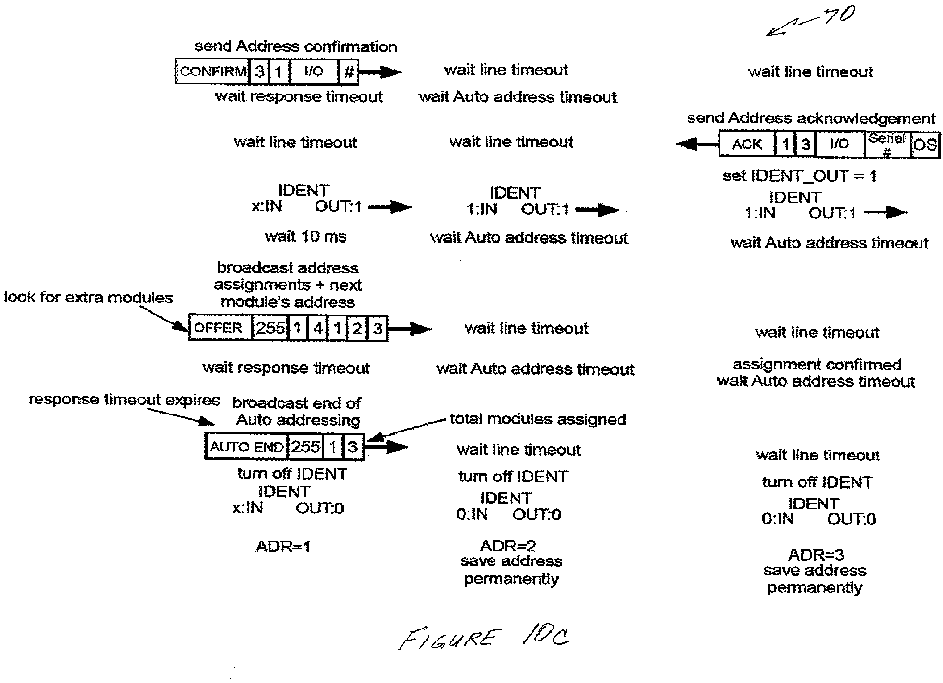

After the approach or algorithm is finished, virtually all modules 61 that participated in it may have an MS/TP device address assigned to them, and the existence of the modules with their addresses may be in base module 11. Any modules that missed out may remain in an Address unassigned state and will not necessarily participate on platform bus 57. The Figures 10a, 10b and 10c constitute a diagram depicting the operation flow of the present approach of MS/TP auto addressing.

Any missing or unexpected modules found during the present auto addressing approach (as determined by system design) may be noted by base module 11 and the necessary response may be performed.

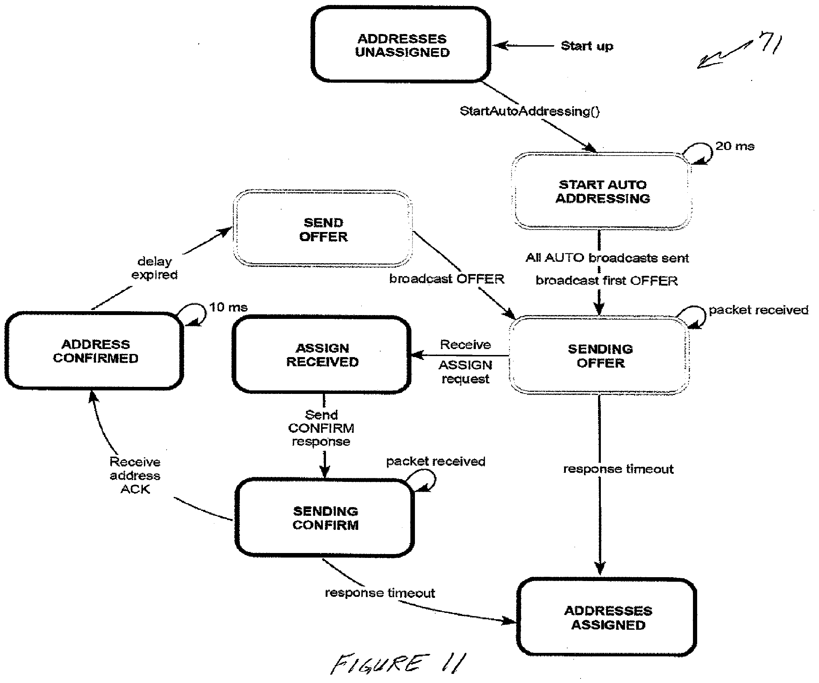

A master state machine may be noted. The present approach may have the following states for the platform bus master (base module). The states may incorporate ADDRESSES_UNASSIGNED, START_AUTO_ADDRESSING, SEND_OFFER, SENDING_OFFER, ASSIGN_RECEIVED, SENDING_CONFIRM, ADDRESS_CONFIRMED, and ADDRESSES_ASSIGNED. There may be more or less states. Figure 11 is a diagram 71 showing a master state machine for the platform bus master.

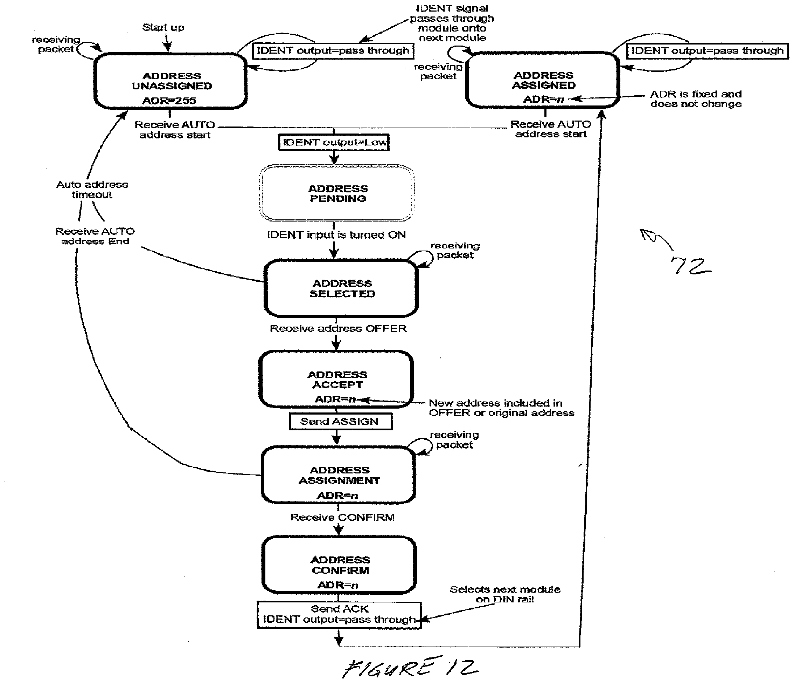

A slave state machine may be noted. The present approach may have the following states for the platform bus slaves (non-base module). The states may incorporate ADDRESSUNASSIGNED, ADDRESS_PENDING, ADDRESS_SELECTED, ADDRESS_ACCEPT, ADDRESS_ASSIGNMENT, ADDRESS_CONFIRM, and ADDRESS_ASSIGNED. Figure 12 is a diagram 72 showing a state machine for the slave modules on the platform bus.

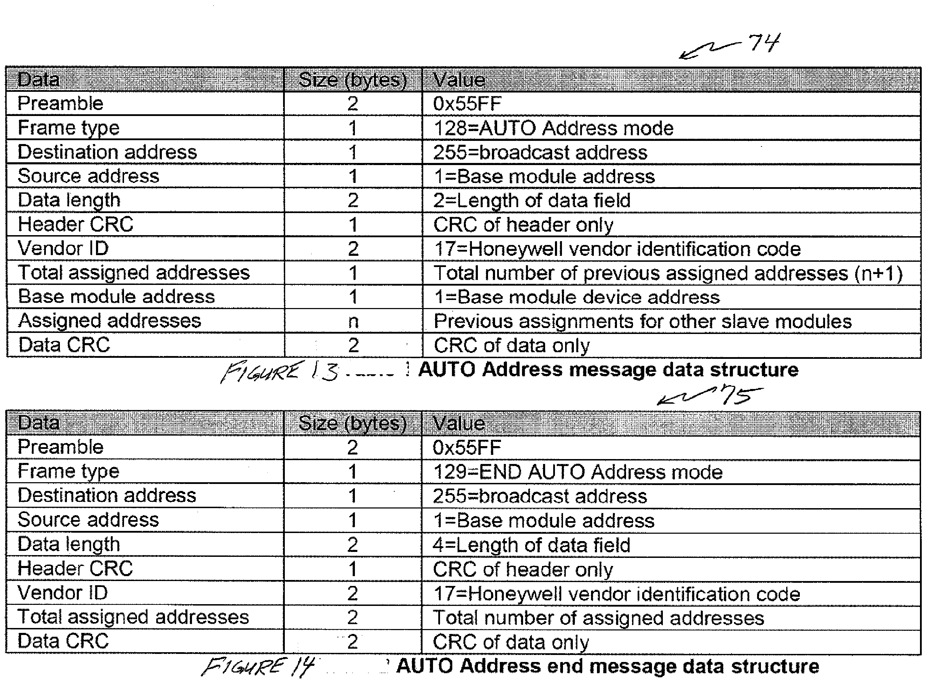

The MS/TP message format may be noted. The structure of the MS/TP messages used in the auto addressing algorithm is shown in Figures 13-18. An AUTO Address may be a message used to start Auto addressing mode in all modules on the platform bus. Figure 13 is a table 74 showing an AUTO Address message data structure.

An AUTO Address End may be a message that signals when Auto addressing mode should be exited. Figure 14 is a table 75 showing an AUTO Address end message data structure.

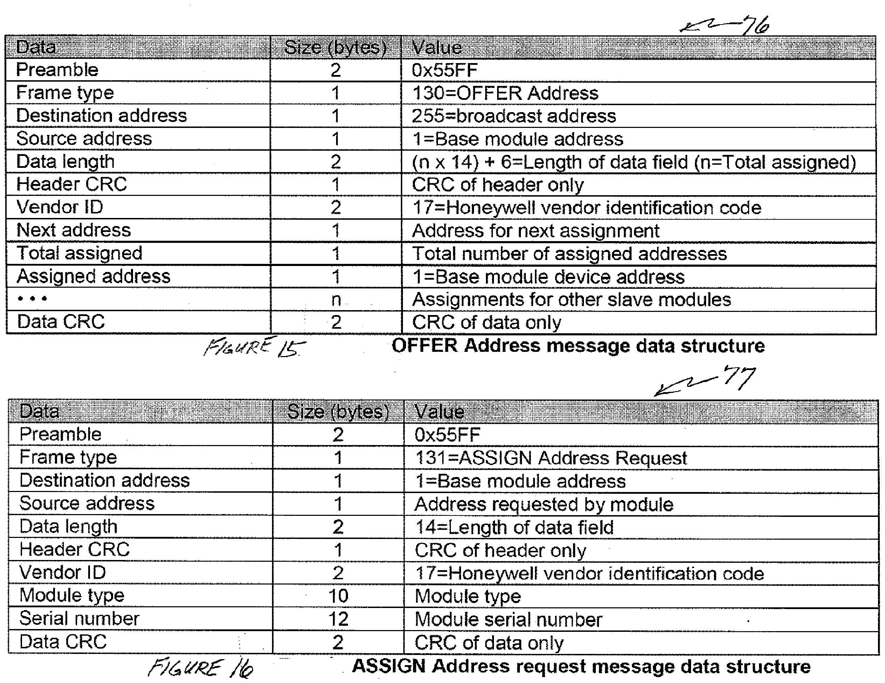

An OFFER Address may be a message used by the base module to offer an available device address ("Next address") to a slave module. Figure 15 is a table 76 showing an OFFER Address message data structure. The OFFER Address message may have a variable length since the number of slave modules that have been assigned an address varies. The "Assigned address" field may be provided for each module that has been assigned a device address and as a group may be called the assigned address list. The "Total assigned" field value may determine the number of module instances in this list, and therefore, derive the total size of this message.

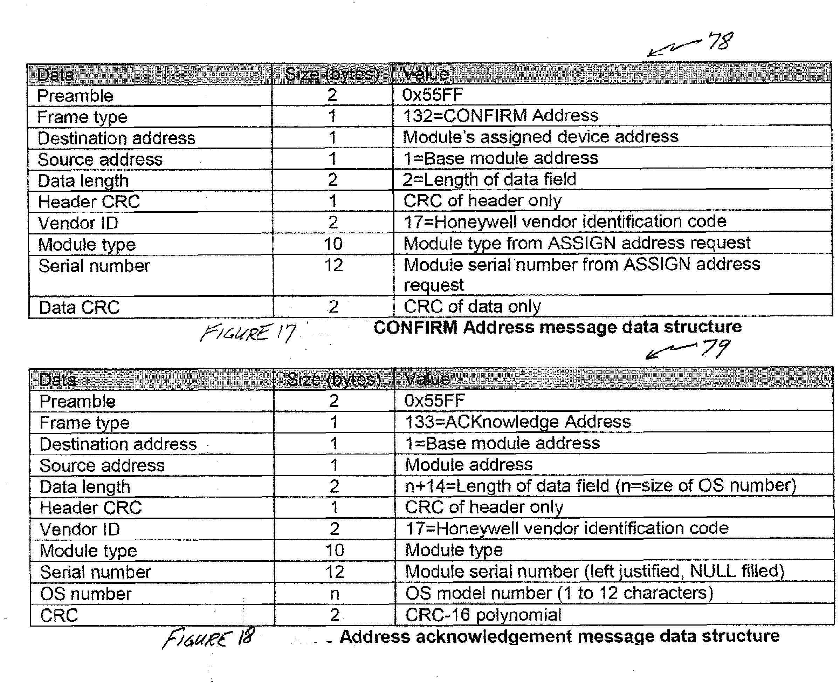

An ASSIGN Address Request message may be used by a slave module to request a device address. Figure 16 is a table 77 of an ASSIGN Address request message data structure. A Source address may be the address being requested and normally be the address offered by the base module in the OFFER address message. An Address CONFIRM message may be used by the base module to confirm the device address assigned to a slave module. Figure 17 is a table 78 of a CONFIRM Address message data structure. An Address ACKnowledgement message may be used by a slave module to acknowledge the device address that it has been assigned. Figure 18 is a table 79 of an Address acknowledgement message data structure.

Safety and programmable logic integration may be noted. In some systems, used to control equipment that needs safety devices and programmable logic, standalone safety controls may be integrated with the programmable logic in two ways. One example of a safety control may be a burner control; one example of programmable logic may be a programmable logic control (PLC), which can be a common term used to identify a particular type of programmable logic. The PLC typically, but not necessarily, may perform non-safety functions. One approach may be to connect wires from the safety device's inputs and outputs to PLC inputs and outputs so that the PLC can both monitor what the safety device is doing and also request the safety device to perform certain actions (such as issuing a call-for-heat to a burner control to request it to light the burner). Another approach, which might or might not be used in combination with the first, may incorporate implementing a communication protocol so that the PLC can "talk to" the safety device. The approach may often require a protocol converter or adapter as an external electrical device, unless the PLC and the safety device both speak the same protocol. In either approach, special programming of the PLC may be needed to "teach" it how to interpret and use the safety device's electrical or communication data. Thus for either case, a considerable amount of customizing work, often requiring both hardware and software, may be needed to allow the programmable device to know whatever it needs to know to perform its control function.

The present system may provide transparent and seamless integration of a programmable logic module (with expansion input/output (I/O) modules that are used to operate equipment) and safety devices incorporating a burner control 12, a fuel air control 18, a flame module 14, and/or a limit control 17. (Figure 1.) The system may consist of safety, programmable logic, and I/O modules 15 and 16 that are designed to mount on DIN rail 19 and interconnect via side-by-side connectors, and also to talk to each other, via a common communication protocol carried by the wires in these connectors. From the end-users' perspective, the protocol and connections appear invisible.

Programmable logic may include an ability to control input and output electrical terminals that are part of the PLC and that are connected to actuators and sensors in the controlled equipment. In the present system, a feature is that virtually of the safety device internal status data and the safety device inputs and outputs may be modeled and appear in the same context as the PLC's own inputs and outputs. Thus, the status and control, and I/O data may be "attached" to the programmable logic's software routines without any need for electrical interfaces, protocol adapters, or custom programming to interpret the information. No special effort or customization is required. Virtually all of the dozens or hundreds of information items in a safety device may easily and transparently be available for programmable logic use.

A designer of programmable logic to operate equipment (such as an air handler, boiler, or furnace) may select the safety modules needed by that equipment and also the I/O modules 15 and 16 to connect the programmable logic to that equipment. Another module called base module 11 may always be present in the system; module 11 contains the power supply for the system, communication to the outside world, and the programmable logic. The designer then may use a typical programming environment to develop the control logic. For the system, the environment may be a high level "wire sheet" logic block editor: where logic blocks are drag-dropped from a palette onto a design sheet on a computer screen and these can be interconnected by dragging lines between the blocks. Wherever the control logic needs inputs or outputs, the designer may use the editor to specify a connection between the logic and the I/O by using conventions provided by the logic editor; e.g., by opening a properties dialog box for a logical input or output block, and selecting an I/O device or terminal by name, via a pop-up list. In the present system, the pop-up list may incorporate not only the typical PLC I/O module inputs and outputs, but also the inputs, outputs, and internal registers of the safety devices.

Combustion control with a programmable display may be noted. A combustion control system such as a burner control or fuel-air control may include a display that is designed to operate the control. Some customers may request the manufacturer to modify the display in small ways such as changing the name of something to match their preference; removing a feature that, for that customer, is unused; or adding a feature; or moving a feature to a different screen; or providing a customized logo. Other customers may want to completely differentiate their version of the product by making the display uniquely theirs in layout, color scheme, content, graphics used, and so on, so that it does not look anything like a competitor's display even though the competitor is using the same control and electromechanical components. Moreover, modern modular controls may include programmable behavior that is designed or heavily customized by a customer; therefore, the display for those behaviors cannot necessarily be anticipated by the combustion and display equipment manufacturer but instead should be designed by the customer who is also creating the programmable behavior.

The combustion control system may represent a status of its dedicated purpose devices as a set of defined data items, called "registers" here. A customer who creates programmable behavior logic may also create other registers to provide the data generated by that logic. These registers may then be served (i.e., provided to the display) by using a standard interface. One example of a standard interface may be the HTTP protocol used by a web server, which can receive requests for data from a client and provide responses to the client. On the display side, an example of a display driver that uses this interface may be a web browser, and an example of a display design tool may be a web page development tool for creating web pages.

By using a page design program, the designer of the special programmable logic (on the control that provides the web server) may create a display for that logic on the display (that implements a web client). The display may consist of pages, tabs, touch-screen buttons, graphics, text, animations, and similar display objects. These may be controlled as to their content or appearance or behavior by data from the programmable logic device. Similarly touch-screen buttons on the display may send altered values to registers to operate the control system.

To attach a display object to specific data that it uses (e.g., data that animates it, or provides a value to be displayed, or receives a value that is set), the designer may just specify a register that provides appropriate data.

Thus, a designer may use the display design tool and a register mechanism to independently create a specialized user interface, avoiding perhaps any need to pass this request to develop this on to the equipment manufacturer. This may be used for a range of display adaptation needs, from slight modifications of existing display screens perhaps initially provided by the manufacturer, up to a complete redesign of the display for differentiation.

When the design is complete, data representing that design may be stored into the control such that any display that is compatible might use this information to represent the design; that is, the design may reside and stay with the control for which it was created.

Because the equipment display may use a standard client mechanism (such as a web browser) that exists on multiple kinds of hardware, and because the display design is implemented and stored in the control (in the server), the display screens are compatible with many physical devices such as a display specifically designed for the equipment, a smart phone, a tablet, or a PC.

Additionally, for a device such as a PC which can provide multiple client windows, multiple simultaneous live views (pages) of the controller status and operation may be easily available, each in its own window.

Display design tools are common and as indicated, a standard web page design tool is an example. The difference versus related art may be in 1) the application of this technology to a combustion control system, 2) the use of registers that are built-in for pre-designed functions and/or added for customer-designed functions as a way to easily bind the display objects to the data, 3) the storage of the display data in the control rather than in the display, 4) the flexibility of having the display run anywhere, and/or 5) the ease of obtaining multiple views of the control.

The customer may purchase the appropriate control and a display that has not been specially programmed. The customer may then use techniques provided by the control to set it up and create custom logic for it. The customer may still then use a display design tool along with knowledge of the registers in the control to either create a display with any degree of customization, from minor adjustments to completely different from all others. When the design is complete, it may be loaded into the control, such as via a factory-based loader program.

To recap, a system for integration of safety and programmable logic may incorporate one or more safety devices, and a module having programmable logic. One or more safety devices may be selected from a group consisting of flame amplifier modules, burner control modules, limit modules and fuel air ratio modules. The modules may interconnect with one another via connectors, and wires or wireless media connecting the connectors. The modules may talk with one another via a communication protocol carried by the connectors and wires or wireless media. Internal status data, inputs and outputs of the one or more safety devices may be modeled and appear in a context of inputs and outputs of the programmable logic. Programmable logic may incorporate logic of various kinds, such as programmable behavior logic, in certain configurations.

The connectors and wires may consist of a daisy chain cable.

Any of the connections, modes of conveyance, inputs and outputs, and chains noted herein may be wireless. Some connectors may operate in lieu of wires or wireless media.

The status data, inputs, outputs and control may be attached to software routines of the programmable logic.

Virtually all of information items in a safety device may be transparently available for use with the programmable logic.

One or more pieces of heating, ventilation and air conditioning (HVAC) equipment may be operated by the programmable logic. One or more safety modules needed for the one or more pieces of the HVAC equipment may be selected. One or more input and output (I/O) modules may be selected for the one or more pieces of the HVAC equipment.

The base module further may have a power supply for the system and a communication device for contact outside of the system.

A wire sheet logic block editor or ladder logic editor may be used to develop the programmable logic.

The wire sheet logic block editor may incorporate logic blocks drag-dropped from a palette onto a design sheet on a screen in a display of a computer. The logic blocks may be interconnected by dragging lines between the logic blocks.

A resulting logic circuit of the wire sheet logic block editor may specify a connection between the logic circuit and inputs and outputs by opening a properties dialog box for a logical input block or logical output block, and selecting each input or output device or terminal by name, via a pop-up list.

The pop-up list may incorporate selecting one or more input or output devices or terminals from a group consisting of programmable logic I/O module inputs and outputs, and inputs, outputs, and registers of the one or more safety devices.

An approach for integration of safety and programmable logic may incorporate providing a base module; selecting one or more safety device modules from a group consisting of flame amplifier modules, burner control modules, limit modules and fuel air ratio modules; arranging the modules adjacent to one another in a row; and interconnecting the modules with connectors and wires connecting the connectors on one side of a module with side-by-side connectors on another side of the module. The modules may talk with one another via a common communication protocol on a communications bus. The communications bus may incorporate the side-by-side connectors and the wires among the modules. One of the modules may incorporate programmable logic.

The approach may further incorporate modeling internal status data. Inputs and outputs of the one or more safety devices may be modeled in a context of inputs and outputs of the programmable logic.

The common communication protocol and connections may be invisible to a user on the communications bus.

The base module may further incorporate a power supply for the other modules, and a communication device for providing outside contact for the communications bus.

The approach may further incorporate providing input/output (I/O) modules placed in the row of the other modules and interconnected with one or more adjacent modules in the row.

Information items in a safety device module may be viewable to the programmable logic.

An integrating mechanism may incorporate a programmable logic module, input/output (I/O) modules connected to the programmable logic module, and safety device modules connected to the programmable logic module. The modules may be connected with one another with connectors on each module. The modules may talk to each other via a common communication protocol carried by wires in the connectors. The programmable logic module may monitor and/or control signals on input and output terminals of the I/O modules that are connected to the actuators and sensors in controlled equipment. The programmable logic module may control non-safety aspects of the safety devices and inputs and outputs of the safety device modules and may be modeled and appear in a same context as the signals of the input and output terminals of the I/O modules.

The safety device modules may be selected on the basis of need by the controlled equipment. The I/O modules may be selected for connecting the programmable logic to the controlled equipment.

A control logic of the programmable logic may be developed with a wire sheet logic block editor or ladder logic editor.

The wire sheet logic block editor may incorporate logic blocks drag-dropped from a palette into a design sheet on a screen of a computer. The logic blocks may be interconnected by dragging lines between the logic blocks.

A burner control module may be regarded as a combustion control mechanism and vice versa, in various configurations.

A programmable display system for a combustion control mechanism may incorporate a display designed to operate a combustion control mechanism, dedicated purpose devices having a status represented by a set of defined data items referred to as registers, programmable behavior logic created by a customer, other registers created by the customer to provide data generated by the programmable behavior logic, and a standard interface for serving the other registers to the display.

The standard interface may be an http protocol used by a web server. The web server may receive requests for data from a client and provide responses to the requests from the client.

The customer, by data from the programmable logic, may control content, appearance or behavior of one or more objects of the display. The objects may be selected from a group consisting of pages, tabs, panes, buttons, graphics, widgets, icons, text, and animations.

The objects on the display may send altered values to registers for operating the combustion control mechanism.

The customer may specify a register that provides appropriate data, to attach an object of the display, to animate an object, to provide a value to be displayed or to receive a value that is set.

The customer may use a display design tool and a register mechanism to independently create a specialized user interface. The customer may use a display design tool and register mechanism in the control to create the display having a design varying from minor adjustments to a design wholly different from a design of the display when obtained by the customer.

Upon completion of a redesign of the display, data representing a resulting design of the display may be stored in a control.

The control may be an http server. Since the design of the display is stored in the server, screens of the display may be compatible with a display designed for a smart phone, a tablet, or a personal computer.

The registers may be added for functions designed by the customer as a way to bind objects to data.

Data of the display may be stored in a control. The control may be a server.

The control and display may be obtained by the customer. The customer may use techniques from the control to set up the display and create custom logic for the display.

An approach for combustion control may incorporate operating a combustion control with a display; dedicating purpose devices, each device having a status represented by set of defined data items regarded as a register; and obtaining other registers created by a customer to provide data generated by programmable behavior logic created by the customer. Information of the registers may be provided to the display with a standard interface.

To attach a display object to specific data that the object uses, a register that provides the appropriate data may be specified.

The approach may further incorporate creating a specialized user interface by using a display design tool and a register mechanism.

The display design tool may be used for a range of adaption of the display from slight modifications to a complete redesign of the display.

Data representing a design of the display may be stored in the combustion control.

The design of the display may be compatible with a display of a smart phone, tablet or a personal computer.

Where there are multiple client windows available on a display, the display may provide multiple simultaneous live views of status and operation of the combustion control.

A mechanism, for design of a display in a combustion control system, may incorporate a display and a status of a dedicated purpose device represented as a set of defined data items called a register. One who creates programmable behavior logic may create other registers to provide data generated by the programmable behavior logic. The registers may be provided to the display using a standard interface.

The display may incorporate one or more items selected from a group consisting of pages, tabs, buttons, graphics, text, and animations. The one or more items may have content, appearance or behavior controlled by data from the programmable behavior logic. Objects on the display may send values to registers to operate the combustion control system.

To attach an object on a display to specific data used by the object, a register may be specified to provide appropriate data. A display design tool and a register mechanism may be used to create a specialized user interface in an independent manner.

## Claims

1. A system for integration of safety and programmable logic comprising:
one or more safety devices providing self-contained safety control;
a base module (11) having programmable logic and
connectors configured to carry a common communication protocol between the one or more safety devices and the base module (11); and
wherein
the one or more safety devices are selected from a plurality of group modules consisting of flame amplifier modules, burner control modules (12), limit modules and fuel air ratio modules, wherein the limit modules includes an analog limit control (17) to control at least one of a temperature or pressure limit;
the plurality of group modules of the one or more safety devices and the base module (11) having programmable logic interconnect with one another via the connectors and wires connecting the connectors;
the base module (11) is configured to dynamically assign an address on a platform bus (57) at run-time to the one or more safety devices to ensure unique addressing for the plurality of group modules of the one or more safety devices, wherein the dynamically assign the address on the platform bus is based on a physical position of each module on a DIN rail (19) of the platform bus, the step of dynamically assignment of the addresses being executed by the base module by:
assigning a first address to the base module by default;
assigning a second address to a first module adjoining the base module on right side of the base module,
assigning a third address to a second module to the right side of the base module, and
proceeding the assignment of the address to the right until each module is assigned an address except that modules that do not participate on platform bus (57) but occupy space on the DIN rail (19) are not assigned an address for platform bus (57) with the platform bus (57) passing through these modules onto the next adjoining module (61) eligible for an address; and
internal status data, inputs and outputs of the one or more safety devices are modeled as inputs and outputs of the programmable logic.

2. The system of claim 1, wherein:
the connectors and wires consist of a daisy chain cable;
the status data, inputs, outputs and control are provided to software routines of the programmable logic; and
all of information items in a safety device are available for use with the programmable logic.

3. The system of claim 1, wherein:
one or more pieces of heating, ventilation and air conditioning (HVAC) equipment are operated by the programmable logic of the base module (11);
the one or more safety modules are selected from the plurality of group modules used in operating one or more pieces of the HVAC equipment; and
one or more input and output (I/O) modules are selected from a group of I/O modules (15,16) different from the plurality of group modules used in operating the one or more pieces of the HVAC equipment.

4. A method for integration of safety and programmable logic comprising:
including programmable logic in a base module (11);
selecting one or more safety device modules that are independent from the base module (11) from a plurality of group modules consisting of flame amplifier modules, burner control modules (12), limit modules and fuel air ratio modules, wherein the limit modules includes an analog limit control (17) to control at least one of a temperature or pressure limit, the one or more safety device modules provide self-contained safety control;
arranging the base module (11) and the one or more safety device modules adjacent to one another in a row;
interconnecting the base module (11) and the one or more safety device modules with connectors on one side of each module of the plurality of group modules with side-by-side connectors on another side of each module;
dynamically assigning an address on a platform bus (57) at run-time to the one or more safety devices to ensure unique addressing for the plurality of group modules of the one or more safety devices, wherein the dynamically assign the address on the platform bus is based on a physical position of the each module on a DIN rail (19) of the platform bus, the step of dynamically assignment of the address comprising:
assigning a first address to the base module by default;
assigning a second address to a first module adjoining the base module on right side of the base module,
assigning a third address to a second module to the right side of the base module, and
proceed the assignment of the address to the right until each module has an assigned address except that modules that do not participate on platform bus (57) but occupy space on the DIN rail (19) are not assigned an address for platform bus (57) with the platform bus (57) passing through these modules onto the next adjoining module (61) eligible for an address; and
modeling internal status data, inputs and outputs of the one or more safety devices as inputs and outputs of the programmable logic.

5. The method of claim 4, further comprising:
providing input/output (I/O) modules placed in the row of the plurality of group modules and interconnected with one or more adjacent modules in the row of the plurality of group modules; and
wherein:
the base module (11) comprises a communication device for providing outside-contact for the communications bus.

## Patentansprüche

1. System zur Integration von Sicherheit und programmierbarer Logik, umfassend:
eine oder mehrere Sicherheitsvorrichtungen, die eine eigenständige Sicherheitssteuerung bereitstellen;
ein Basismodul (11), das programmierbare Logik aufweist und
Verbinder, die so konfiguriert sind, dass sie ein gemeinsames Kommunikationsprotokoll zwischen der einen oder den mehreren Sicherheitsvorrichtungen und dem Basismodul (11) übertragen; und
wobei
die eine oder mehreren Sicherheitsvorrichtungen aus einer Vielzahl von Gruppenmodulen ausgewählt sind, die aus Flammenverstärkermodulen, Brennersteuermodulen (12), Begrenzungsmodulen und Brennstoff-Luft-Verhältnis-Modulen bestehen, wobei die Begrenzungsmodule eine analoge Begrenzungssteuerung (17) zum Steuern mindestens einer Temperatur- oder Druckbegrenzung einschließen;
wobei die Vielzahl von Gruppenmodulen der einen oder mehreren Sicherheitsvorrichtungen und das Basismodul (11) eine programmierbare Logik aufweisen, die mittels der Verbinder und Drähte, die die Verbinder verbinden, miteinander verbunden sind;
das Basismodul (11) so konfiguriert ist, dass es der einen oder den mehreren Sicherheitsvorrichtungen während der Laufzeit dynamisch eine Adresse auf einem Plattformbus (57) zuweist, um eine eindeutige Adressierung für die Vielzahl von Gruppenmodulen der einen oder den mehreren Sicherheitsvorrichtungen sicherzustellen, wobei das dynamische Zuweisen der Adresse auf dem Plattformbus auf einer physikalischen Position jedes Moduls auf einer DIN-Schiene (19) des Plattformbusses basiert, wobei der Schritt der dynamischen Zuweisung der Adressen durch das Basismodul ausgeführt wird durch:
standardmäßiges Zuweisen einer ersten Adresse zu dem Basismodul;
Zuweisen einer zweiten Adresse zu einem ersten Modul, das an das Basismodul auf der rechten Seite des Basismoduls angrenzt,
Zuweisen einer dritten Adresse zu einem zweiten Modul auf der rechten Seite des Basismoduls, und
Fortfahren mit der Zuweisung der Adresse nach rechts, bis jedem Modul eine Adresse zugewiesen ist, außer dass Modulen, die nicht am Plattformbus (57) teilnehmen, aber Platz auf der DIN-Schiene (19) belegen, keine Adresse für den Plattformbus (57) zugewiesen wird, wobei der Plattformbus (57) durch diese Module zum nächsten angrenzenden Modul (61) führt, das für eine Adresse geeignet ist; und
interne Zustandsdaten, Eingänge und Ausgänge der einen oder mehreren Sicherheitsvorrichtungen werden als Eingänge und Ausgänge der programmierbaren Logik modelliert.

2. System nach Anspruch 1, wobei:
die Verbinder und Drähte aus einem Daisy-Chain-Kabel bestehen;
die Statusdaten, Eingaben, Ausgaben und Steuerung für Softwareroutinen der programmierbaren Logik bereitgestellt werden; und
alle Informationselemente in einer Sicherheitsvorrichtung zur Verwendung mit der programmierbaren Logik verfügbar sind.

3. System nach Anspruch 1, wobei:
ein oder mehrere Einheiten von Heizungs-, Lüftungs- und Klimaanlagen (HVAC)-Ausrüstung durch die programmierbare Logik des Basismoduls (11) betrieben werden;
das eine oder die mehreren Sicherheitsmodule aus der Vielzahl von Gruppenmodulen ausgewählt werden, die beim Betreiben einer oder mehrerer Einheiten der HVAC-Ausrüstung verwendet werden; und
ein oder mehrere Eingangs- und Ausgangs-(E/A-) Module aus einer Gruppe von E/A-Modulen (15, 16) ausgewählt werden, die sich von der Vielzahl von Gruppenmodulen unterscheiden, die beim Betreiben der einen oder mehreren Einheiten der HVAC-Ausrüstung verwendet werden.

4. Verfahren zur Integration von Sicherheit und programmierbarer Logik, umfassend:
Einschließen programmierbarer Logik in ein Basismodul (11);
Auswählen eines oder mehrerer vom Basismodul (11) unabhängiger Sicherheitsvorrichtungsmodule aus einer Vielzahl von Gruppenmodulen, die aus Flammenverstärkermodulen, Brennersteuermodulen (12), Begrenzungsmodulen und Brennstoff-Luft-Verhältnis-Modulen bestehen, wobei die Begrenzungsmodule eine analoge Begrenzungssteuerung (17) zum Steuern mindestens eines einer Temperatur- oder Druckgrenze einschließen, wobei das eine oder die mehreren Sicherheitsvorrichtungsmodule eine eigenständige Sicherheitssteuerung bereitstellen;
Anordnen des Basismoduls (11) und des einen oder der mehreren Sicherheitsvorrichtungsmodule nebeneinander in einer Reihe;
Verbinden des Basismoduls (11) und des einen oder der mehreren Sicherheitsvorrichtungsmodule mit Verbindern auf einer Seite jedes Moduls der Vielzahl von Gruppenmodulen mit Seite-an-Seite-Verbindern auf einer anderen Seite jedes Moduls;
dynamisches Zuweisen einer Adresse auf einem Plattformbus (57) während der Laufzeit, um eine eindeutige Adressierung für die Vielzahl von Gruppenmodulen der einen oder mehreren Sicherheitsvorrichtungen sicherzustellen, wobei die dynamische Zuweisung der Adresse auf dem Plattformbus auf einer physikalischen Position jedes Moduls auf einer DIN-Schiene (19) des Plattformbusses basiert, wobei der Schritt des dynamischen Zuweisens der Adressen umfasst:
standardmäßiges Zuweisen einer ersten Adresse zu dem Basismodul;
Zuweisen einer zweiten Adresse zu einem ersten Modul, das an das Basismodul auf der rechten Seite des Basismoduls angrenzt,
Zuweisen einer dritten Adresse zu einem zweiten Modul auf der rechten Seite des Basismoduls, und
Fortfahren mit der Zuweisung der Adresse nach rechts, bis jedes Modul eine zugewiesene Adresse aufweist, außer dass Modulen, die nicht am Plattformbus (57) teilnehmen, aber Platz auf der DIN-Schiene (19) belegen, keine Adresse für den Plattformbus (57) zugewiesen wird, wobei der Plattformbus (57) durch diese Module zum nächsten angrenzenden Modul (61) führt, das für eine Adresse geeignet ist; und
Modellieren interner Zustandsdaten, Eingänge und Ausgänge der einen oder mehreren Sicherheitsvorrichtungen als Eingänge und Ausgänge der programmierbaren Logik.

5. Verfahren nach Anspruch 4, ferner umfassend:
Bereitstellen von Eingangs-/Ausgangs-(E/A-) Modulen, die in der Reihe der Vielzahl von Gruppenmodulen angeordnet und mit einem oder mehreren benachbarten Modulen in der Reihe der Vielzahl von Gruppenmodulen verbunden sind; und
wobei:
das Basismodul (11) eine Kommunikationsvorrichtung zum Bereitstellen eines Außenkontakts für den Kommunikationsbus umfasst.

## Revendications

1. Système d'intégration de sécurité et de logique programmable comprenant :
un ou plusieurs dispositifs de sécurité assurant une commande de sécurité autonome ;
un module de base (11) ayant une logique programmable et
des connecteurs configurés pour transporter un protocole de communication commun entre le ou les dispositifs de sécurité et le module de base (11) ; et
dans lequel
le ou les dispositifs de sécurité sont sélectionnés parmi une pluralité de modules de groupe constitués de modules d'amplificateur de flamme, de modules de commande de brûleur (12), de modules de limite et de modules de rapport air-combustible, les modules de limite comprenant une commande de limite analogique (17) pour commander au moins un élément parmi une limite de température ou de pression ;
la pluralité de modules de groupe du ou des dispositifs de sécurité et du module de base (11) ayant une interconnexion de logique programmable les uns avec les autres par l'intermédiaire des connecteurs et des fils connectant les connecteurs ;
le module de base (11) est configuré pour attribuer dynamiquement une adresse sur un bus de plate-forme (57) au moment de l'exécution au(x) dispositif(s) de sécurité pour garantir un adressage unique pour la pluralité de modules de groupe du ou des dispositifs de sécurité, l'attribution dynamique de l'adresse sur le bus de plate-forme étant basée sur une position physique de chaque module sur un rail DIN (19) du bus de plate-forme, l'étape d'attribution dynamique des adresses étant exécutée par le module de base par :
l'attribution d'une première adresse au module de base par défaut ;
l'attribution d'une deuxième adresse à un premier module attenant au module de base sur le côté droit du module de base,
l'attribution d'une troisième adresse à un second module sur le côté droit du module de base et
la réalisation de l'attribution de l'adresse vers la droite jusqu'à ce que chaque module se voie attribuer une adresse, toutefois les modules qui ne participent pas au bus de plate-forme (57) mais occupent de l'espace sur le rail DIN (19) ne se voient pas attribuer d'adresse pour le bus de plate-forme (57), le bus de plate-forme (57) passant à travers ces modules sur le module attenant suivant (61), éligible pour une adresse ; et
les données d'état internes, les entrées et les sorties du ou des dispositifs de sécurité sont modélisées en tant qu'entrées et sorties de la logique programmable.

2. Système selon la revendication 1, dans lequel :
les connecteurs et les fils sont constitués d'un câble en guirlande ;
les données d'état, les entrées, les sorties et la commande sont fournies aux routines logicielles de la logique programmable ; et
toutes les informations d'un dispositif de sécurité sont disponibles pour être utilisées avec la logique programmable.

3. Système selon la revendication 1, dans lequel :
une ou plusieurs pièces d'équipement de chauffage, ventilation et climatisation (CVC) sont actionnées par la logique programmable du module de base (11) ;
le ou les modules de sécurité sont sélectionnés parmi la pluralité de modules de groupe utilisés pour faire fonctionner une ou plusieurs pièces de l'équipement CVC ; et
un ou plusieurs modules d'entrée et de sortie (E/S) sont sélectionnés à partir d'un groupe de modules d'E/S (15, 16) différents de la pluralité de modules de groupe utilisés pour faire fonctionner la ou les pièces de l'équipement CVC.

4. Procédé d'intégration de sécurité et de logique programmable comprenant :
l'inclusion d'une logique programmable dans un module de base (11) ;
la sélection d'un ou plusieurs modules de dispositif de sécurité qui sont indépendants du module de base (11) parmi une pluralité de modules de groupe constitués de modules d'amplificateur de flamme, de modules de commande de brûleur (12), de modules de limite et de modules de rapport air-combustible, les modules de limite comprenant une commande de limite analogique (17) pour commander au moins un élément parmi une limite de température ou de pression, le ou les modules de dispositif de sécurité fournissant une commande de sécurité autonome ;
l'agencement du module de base (11) et du ou des modules de dispositif de sécurité adjacents les uns aux autres dans une rangée ;
l'interconnexion du module de base (11) et du ou des modules de dispositif de sécurité avec des connecteurs sur un côté de chaque module de la pluralité de modules de groupe avec des connecteurs côte à côte sur un autre côté de chaque module ;
l'attribution dynamique d'une adresse sur un bus de plate-forme (57) au moment de l'exécution au(x) dispositif(s) de sécurité pour garantir un adressage unique pour la pluralité de modules de groupe du ou des dispositifs de sécurité, l'attribution dynamique de l'adresse sur le bus de plate-forme étant basée sur une position physique de chaque module sur un rail DIN (19) du bus de plate-forme, l'étape d'attribution dynamique de l'adresse comprenant :
l'attribution d'une première adresse au module de base par défaut ;
l'attribution d'une deuxième adresse à un premier module attenant au module de base sur le côté droit du module de base,
l'attribution d'une troisième adresse à un second module sur le côté droit du module de base et
la réalisation de l'attribution de l'adresse vers la droite jusqu'à ce que chaque module ait une adresse attribuée, toutefois les modules qui ne participent pas au bus de plate-forme (57) mais occupent de l'espace sur le rail DIN (19) ne se voient pas attribuer d'adresse pour le bus de plate-forme (57), le bus de plate-forme (57) passant à travers ces modules sur le module attenant suivant (61), éligible pour une adresse ; et
la modélisation de données d'état internes, d'entrées et de sorties du ou des dispositifs de sécurité en tant qu'entrées et sorties de la logique programmable.

5. Procédé selon la revendication 4, comprenant en outre :
la fourniture de modules d'entrée/sortie (E/S) placés dans la rangée de la pluralité de modules de groupe et interconnectés avec un ou plusieurs modules adjacents dans la rangée de la pluralité de modules de groupe ; et
dans lequel : le module de base (11) comprend un dispositif de communication pour fournir un contact extérieur pour le bus de communication.
